(19) **Europäisches Patentamt / European Patent Office / Office européen des brevets**

(11) **EP 2 419 882 B1**

(12) **FASCICULE DE BREVET EUROPEEN**

(45) Date de publication et mention
de la délivrance du brevet:
**13.06.2018 Bulletin 2018/24**

(21) Numéro de dépôt: **10723703.4**

(22) Date de dépôt: **19.04.2010**

(51) Int Cl.:
*G06T 7/20* (2017.01)    *G06K 9/00* (2006.01)
*G08B 13/194* (2006.01)

(86) Numéro de dépôt international:
**PCT/FR2010/050751**

(87) Numéro de publication internationale:
**WO 2010/119231 (21.10.2010 Gazette 2010/42)**

(54) **SYSTEME ET PROCEDE DE LOCALISATION DE CIBLE PAR UN RESEAU DE CAMERAS**

SYSTEM UND VERFAHREN ZUM LOKALISIEREN EINES ZIELS MIT EINEM NETZ VON KAMERAS

SYSTEM AND METHOD FOR LOCATING A TARGET WITH A NETWORK OF CAMERAS

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **17.04.2009 FR 0901880
02.10.2009 FR 0904714**

(43) Date de publication de la demande:
**22.02.2012 Bulletin 2012/08**

(73) Titulaire: **Université de Technologie de Troyes
10010 Troyes Cedex (FR)**

(72) Inventeur: **SNOUSSI, Hichem
F-10120 St Andre Les Vergers (FR)**

(74) Mandataire: **Debay, Yves
Cabinet Debay
126 Elysée 2
78170 La Celle Saint Cloud (FR)**

(56) Documents cités:
• VERMAAK J ET AL: "Variational inference for visual tracking" PROCEEDINGS / 2003 IEEE COMPUTER SOCIETY CONFERENCE ON COMPUTER VISION AND PATTERN RECOGNITION, 18 - 20 JUNE 2003, MADISON, WISCONSIN; [PROCEEDINGS OF THE IEEE COMPUTER CONFERENCE ON COMPUTER VISION AND PATTERN RECOGNITION], LOS ALAMITOS, CALIF. [U.A, vol. 1, 18 juin 2003 (2003-06-18), pages 773-780, XP010644975 ISBN: 978-0-7695-1900-5

• YONGGANG JIN ET AL: "Variational Particle Filter for Multi-Object Tracking" COMPUTER VISION, 2007. ICCV 2007. IEEE 11TH INTERNATIONAL CONFERENCE O N, IEEE, PI, 1 octobre 2007 (2007-10-01), pages 1-8, XP031194441 ISBN: 978-1-4244-1630-1
• JING TENG ET AL: "Binary Variational Filtering for Target Tracking in Sensor Networks" STATISTICAL SIGNAL PROCESSING, 2007. SSP '07. IEEE/SP 14TH WORKSH OP ON, IEEE, PI, 1 août 2007 (2007-08-01), pages 685-689, XP031134157 ISBN: 978-1-4244-1197-9
• JING TENG ET AL: "Prediction-Based Proactive Cluster Target Tracking Protocol for Binary Sensor Networks" SIGNAL PROCESSING AND INFORMATION TECHNOLOGY, 2007 IEEE INTERNATIONAL SYMPOSIUM ON, IEEE, PISCATAWAY, NJ, USA, 15 décembre 2007 (2007-12-15), pages 234-239, XP031234284 ISBN: 978-1-4244-1834-3
• JING TENG ET AL: "Variational Filtering Algorithm For Interdependent Target Tracking and Sensor Localization in Wireless Sensor Network" 16TH EUROPEAN SIGNAL PROCESSING CONFERENCE, EUSIPCO-2008, LAUSANNE, CH; 25-29 AUGUST 2008,, [Online] 25 août 2008 (2008-08-25), page 5PP, XP007910577 Extrait de l'Internet: URL:http://ltswww.epfl.ch/~eusipco2008/eus ipco2008-program.pdf> [extrait le 2009-11-19]

- **HICHEM SNOUSSI ET AL: "Ensemble Learning Online Filtering in Wireless Sensor Networks" COMMUNICATION SYSTEMS, 2006. ICCS 2006. 10TH IEEE SINGAPORE INTERNATIO NAL CONFERENCE ON, IEEE, PI, 1 octobre 2006 (2006-10-01), pages 1-5, XP031042189 ISBN: 978-1-4244-0410-0**
- **BESMA R. ABIDI, NASH R. ARAGAM,YI YAO, MONGI A. ABIDI: "Survey and analysis of multimodal sensor planning and integration for wide area surveillance" ACM COMPUTING SURVEYS, vol. 41, no. 1, décembre 2008 (2008-12), pages 7.1-7.36, XP009126135**
- **Omar Javed ET AL: "Automated Video Surveillance and Tracking in Multiple Cameras with Disjoint Views" In: "Automated Multi-Camera Surveillance: Algorithms and Practice", 1 January 2008 (2008-01-01), Springer US, Boston, MA, XP055359366, ISSN: 1571-5205 ISBN: 978-0-387-78881-4 vol. 10**

**Description**

La présente invention concerne le domaine de l'électronique, notamment des réseaux de capteurs d'images tels que les caméras et, en particulier, le domaine de la localisation et/ou du suivi de cible(s) par un réseau de caméras, dites « intelligentes ». La présente invention concerne plus particulièrement un système et un procédé localisation au cours du temps, c'est-à-dire le suivi d'une cible (« tracking » selon la terminologie anglo-saxonne) par un réseau de caméras intelligentes.

Les dispositifs d'acquisition d'images utilisés dans la présente invention sont appelés ci-après « caméras » pour des raisons de simplicité et en référence au fait que lorsque l'on peut acquérir des trains d'images (vidéos) avec une caméra, il est évident que l'on peut aussi acquérir simplement des images statiques. L'invention propose un réseau de caméras pour permettre une localisation d'une cible (un objet ou une personne, à titre d'exemples non limitatifs). En fait, on désigne par le terme « caméras » (ou de caméras « intelligentes »), dans la présente demande, des dispositifs qui comportent des moyens d'acquérir des images (statiques ou vidéo), des moyens de traitement de données, notamment de données représentatives de ces images, et des moyens de communication pour diffuser l'information relative à ce traitement, entre eux et/ou jusqu'à un système de niveau supérieur ou un humain. On réfère dans la présente demande à des communications sans fils mais il doit être évident qu'il est possible d'utiliser des communications filaires bien qu'il soit plus pratique d'utiliser des communications sans fil, d'autant plus que la présente invention permet de minimiser la quantité d'informations transitant par ces moyens de communication et ne requiert donc pas les plus hauts débits qu'offrent les communications filaires par rapport aux communications sans fil.

Un réseau de caméras sans fil (RCSF) est en général un système constitué de plusieurs dizaines à plusieurs centaines de noeuds (ou « caméras intelligentes » telles que définies plus haut) interconnectés. Ces noeuds sont constitués chacun d'une caméra (ou moyen d'acquisition d'image), d'une unité de traitement de l'information et de moyens de communication. Les noeuds disposent d'une zone de couverture réduite et sont déployés dans des environnements hétérogènes. Ils sont autonomes et disposent pour cela d'une réserve énergétique, dont le renouvellement peut s'avérer impossible, ce qui limite leur durée de vie. Il est donc utile de minimiser les coûts de chaque noeud. Chacun des noeuds doit être en mesure de traiter les données reçues, de prendre une décision locale et de la communiquer de façon autonome aux noeuds voisins auxquels il est connecté. Cette coopération est destinée à assurer les meilleures prises de décision possibles malgré les limites en termes de consommation énergétique et de puissance de traitement. Les RCSF sont donc assujettis à des contraintes fortes et de natures multiples, énergétique et calculatoire entre autres, ce qui limite les capacités de traitement et de communication des noeuds du réseau. Pour autant, ils doivent répondre à des objectifs stricts en termes de qualité de service compte tenu du caractère sensible des systèmes sur lesquels ils sont amenés à être déployés. Dans ce contexte, il est primordial que les solutions proposées soient coopératives et fassent appel à des techniques distribuées intelligentes, tant au niveau du mode de communication qu'à celui du traitement temps réel des images acquises. L'aspect sans fil des communications peut être mis à profit dans le cadre des réseaux de capteurs pour la transmission de l'information et doit par conséquent être pris en compte dans l'élaboration des algorithmes de traitement du signal. Inversement ces algorithmes reposent sur des communications entre les unités et imposent des contraintes fortes sur les communications.

La vidéo surveillance en temps réel revêt un intérêt de tout premier ordre au sein des communautés scientifiques et industrielles depuis plusieurs années. Plusieurs travaux ont été réalisés pour le suivi (« tracking » selon la terminologie anglo-saxonne) de personnes ou d'objets en mouvement à partir d'une seule caméra. Il est connu des nombreuses solutions pour la détection d'une cible, par exemple par des reconnaissances de forme ou autre méthode et aucun détail ne sera donné ici sur les algorithmes de détection. Malgré la complexité des algorithmes et des modèles proposés, le tracking avec une seule caméra se heurte essentiellement à la présence d'obstacles de différentes natures dans la scène considérée. En particulier, des traitements sophistiqués basés sur des modèles d'apparence ou sur le principe du corrélogramme de couleur ont été proposés afin de s'affranchir des problèmes d'obstacles complets ou partiels. D'autres méthodes de filtrage probabiliste bayésien basées sur des modèles a *priori* de mouvement sont connues. Cependant, l'incorporation d'un modèle a *priori* dynamique de la cible suivie n'offre pas une robustesse suffisante vis-à-vis des obstacles rencontrés (obstacle fixe ou mélange des personnes en mouvement). L'utilisation de plusieurs caméras ayant des vues différentes de la scène surveillée semble apporter une solution robuste vis-à-vis de la présence d'obstacles. Différentes stratégies de fusion de données ont été proposées dans la littérature afin d'exploiter les flux vidéos issus des caméras distribués. Une première classe de stratégies communément utilisées consiste à détecter la cible avec chaque caméra et de calculer les correspondances entre les caméras en se basant sur leurs calibrations ou sur les axes principaux des objets suivis. Le principal défaut de ce type de méthodes est la nécessité que toutes les cibles soient détectées et correctement suivies. L'autre défaut est le fait que toutes les caméras doivent être simultanément actives, ce qui n'est pas possible dans le contexte d'un réseau de caméras sans fil, autonomes et ayant une réserve d'énergie limitée et non renouvelable. La deuxième classe de méthodes se base sur le filtrage particulaire pour la fusion des données des différentes caméras. Le filtrage particulaire consiste à approcher la densité de probabilité de l'état du système (connaissant toutes les images vidéo jusqu'à l'instant courant) avec une méthode de Monte-Carlo séquentielle. Tout l'intérêt de cette approche est sa capacité à résoudre le modèle dynamique non linéaire sans recours à des approximations analytiques. L'aspect non linéaire provient essentiellement du modèle vidéo d'observation qui est fortement non linéaire. On distingue dans cette catégorie 2 types de méthodes :

1. Filtrage particulaire 3D: Il s'agit de simuler un très grand nombre de particules (états du système comme la position, vitesse, direction,...) selon une distribution de probabilité instrumentale dans l'espace 3D, de projeter ces particules dans le plan de chaque caméra pour calculer sa vraisemblance dans cette même caméra et enfin de multiplier les vraisemblances de toutes les caméras ou de quelques caméras sélectionnées pour fusionner les données. Le défaut de cette stratégie est son aspect centralisé qui nécessite la communication des flux vidéo vers une unité centrale. Cet aspect centralisé n'est pas acceptable dans le cadre d'un réseau de caméras sans fil à cause des limitations d'énergie et aussi pour des raisons de sécurité, puisque la détérioration de l'unité centrale met en échec le fonctionnement de l'ensemble du système de surveillance.

2. Filtrage particulaire collaboratif: Cette approche consiste à combiner plusieurs filtres particulaires implémentés dans les différentes caméras. Cette combinaison repose sur des échanges de messages afin d'atteindre les mêmes performances que le filtre particulaire centralisé. Bien que distribuée, cette méthode nécessite un échange important de messages induisant un coût de communication important. En plus, cette méthode n'intègre pas un moyen de sélectionner un sous-ensemble de caméras capables d'atteindre les mêmes performances de tracking que le réseau tout entier.

En comparant les 2 classes de méthodes décrites ci-dessus, on peut constater que le filtrage bayésien implémenté avec une approche particulaire offre un cadre probabiliste plus consistant pour le suivi de cibles dans un réseau de caméras. Cependant, l'approche particulaire ne peut pas s'accommoder des contraintes d'énergie dans le contexte d'un réseau de caméras autonomes. Ainsi, les solutions de l'art antérieur présentent des inconvénients majeurs pour le déploiement de réseaux de caméras autonomes à faibles coûts.

De plus, il est connu dans l'art antérieur des réseaux de caméras sans fil embarquées qui présentent les avantages d'un traitement des images acquises décentralisé sur les caméras (telles que définies précédemment, comportant des moyens de traitement), d'une haute résolution (par exemple capteur CMOS de 3.1 mégapixels) permettant d'obtenir des images 30 fois plus précises que celles obtenues avec la technologie analogique et de champs de vision des caméras qui atteignent 360 degrés, minimisant ainsi le nombre de caméras nécessaires pour la surveillance de régions plus vastes.

Cependant, ce type de solution présente des inconvénients de coût (notamment pour la motorisation des caméras), d'un traitement décentralisé qui est limité à un traitement local de l'image pour une meilleure visibilité, de l'absence de traitement collaboratif, induisant un échec du système dans des cas difficiles, comme la présence de plusieurs obstacles, d'une notion de réseau qui est limité à l'utilisation de plusieurs caméras pour avoir plusieurs vues de la même scène, sans traitement intelligent distribué et d'une taille trop importante des caméras, présentant des risques de dégradations par des intrus au lieu de permettre une surveillance discrète et efficace.

Un problème majeur dans le domaine des réseaux de caméras intelligentes concerne donc le traitement collaboratif réalisé par ces caméras. Il existe un besoin important pour des caméras qui permettent un traitement collaboratif efficace nécessitant des ressources limitées et notamment pour un réseau de caméras permettant que plusieurs caméras réalisent en même temps un suivi d'au moins une cible, grâce à une collaboration entre elles.

Dans ce contexte, il est intéressant de proposer un réseau de caméras pour la localisation (et/ou suivi) de cible proposant un traitement plus avancé comme la détection, le suivi d'objets mobiles, la prise de décision, grâce à un traitement collaboratif des images, en minimisant les échanges d'informations grâce à des caméras intelligentes échangent des informations résultant de traitements locaux afin d'assurer un objectif d'estimation et de décision, dans un réseau tel qu'on l'entend au sens des télécommunications, supportant plusieurs architectures comme par exemple la diffusion (« broadcast » selon la terminologie anglo-saxonne), le pair-à-pair (« peer-to-peer » selon la terminologie anglo-saxonne), etc.

Le document Omar Javed et al.: Automated Multi-Camera Surveillance: Algorithms and Practice, 2008, Springer, décrit un procédé de suivi d'au moins une cible par un réseau de caméras.

La présente invention a pour but de proposer un procédé de localisation de cible par un réseau de caméras permettant de pallier au moins certains inconvénients de l'art antérieur.

Ce but est atteint par un procédé de suivi d'au moins une cible par un réseau de caméras intelligentes selon la revendication 1. Selon une autre particularité, l'étape de suivi à un instant donné, comporte également une étape de détermination d'un indicateur de pertinence de l'estimation de la position de la cible, grâce à au moins un algorithme de sélection permettant la sélection d'au moins une caméra active pour réaliser le suivi, en fonction de son indicateur de pertinence qui représente la différence entre la densité de probabilité de la position de la cible prédite à l'instant précédent et la densité de probabilité de la position de la cible estimée à l'instant courant.

Selon une autre particularité, l'étape de détection d'au moins une cible présente dans la région, à un instant initial, déclenche le suivi de la cible par toutes les caméras ayant détecté la cible, puis une étape de compétition entre les caméras, en fonction de l'indicateur de pertinence déterminé, pour sélectionner les plus pertinentes et former un ensemble de caméras, dites actives en charge du suivi à l'instant donné.

Selon une autre particularité, l'étape de détermination d'un indicateur de pertinence du traitement réalisé déclenche une étape de comparaison, par chaque caméra active à un instant donné, de l'indicateur de pertinence avec un seuil déterminé dans l'algorithme de sélection permettant à la caméra, en fonction du résultat de cette comparaison, de poursuivre le suivi ou de l'abandonner.

Selon une autre particularité, l'étape de comparaison, par chaque caméra active à un instant donné, de son indicateur de pertinence avec un seuil est accompagné d'une étape de comparaison de l'évolution des indicateurs de pertinence des autres caméras, pour tenir compte de cette évolution dans la décision entre la poursuite du suivi et l'abandon, et décider s'il y a lieu de transmettre aux autres caméras du réseau ses données représentatives de la statistique suffisante déterminée par cette caméra, cette transmission déclenchant la réitération de l'étape de compétition entre les caméras pour former un nouvel ensemble lorsque l'indicateur de pertinence de toutes les caméras croise le seuil.

Selon une autre particularité, l'étape de suivi comporte, à chaque instant, une itération d'une étape de prédiction de la position(s) de la cible(s) à l'instant suivant.

Selon une autre particularité, les données représentatives de statistiques suffisantes en termes temporel sont représentatives d'une moyenne et une covariance de la moyenne aléatoire de la position estimée de la cible.

Selon une autre particularité, les caméras sont de localisations géographiques connues grâce au fait que leur moyens de traitement utilisent des données représentatives des positionnement relatifs de leurs champs de vision respectifs.

Selon une autre particularité, l'étape de suivi, par filtrage variationnel, à l'instant, lorsque plusieurs caméras sont activées, est implémentée d'une manière collaborative par les caméras actives, grâce à une dépendance entre leurs filtres variationnels respectifs exprimée par un modèle dynamique d'homographie liant les moyennes aléatoires de la position de la cible respectivement estimées par chacune des caméras actives.

Selon une autre particularité, le suivi est réalisé de manière collaborative par les caméras actives en échangeant des données représentatives de statistiques suffisantes en termes spatial entre les caméras, en plus de celles en termes temporels, ces statistiques suffisantes en termes spatial représentant les espérances mathématiques des positions de la cible dans l'image de chaque caméra active à l'instant courant.

La présente invention a également pour but de proposer un système de localisation de cible par un réseau de capteurs permettant de pallier au moins certains inconvénients de l'art antérieur.

Ce but est atteint par un système de suivi d'au moins une cible par un réseau de caméras intelligentes, comportant chacune des moyens de traitement de données, des moyens d'acquisition d'images et des moyens de communication, le réseau de caméras couvrant au moins une zone géographique, dite région, caractérisé en ce que les moyens de traitement de données implémentent au moins un algorithme pour la localisation et le suivi de cible(s) par la mise en oeuvre du procédé selon l'invention.

Selon une autre particularité, au moins un algorithme utilisé est basé sur un filtre variationnel permettant de minimiser les données échangées entre les caméras pour le suivi à une moyenne et une covariance.

Selon une autre particularité, au moins une image est acquise au cours du suivi par au moins une des caméras, sélectionnée en fonction de sa position par rapport aux coordonnées et/ou à la trajectoire de la cible.

Selon une autre particularité, ladite image, acquise par au moins une caméra sélectionnée pour sa position, est stockée dans des moyens de mémorisation de cette même caméra.

Selon une autre particularité, le système comporte au moins un dispositif de centralisation comportant des moyens de communication avec les caméras du système et des moyens de mémorisation et/ou des moyens d'affichage pour, respectivement, le stockage et/ou l'affichage, de données relatives au suivi et/ou à ladite image acquise, transmises par les caméras.

Selon une autre particularité, le dispositif de centralisation comporte des moyens de saisie permettant à un opérateur de vérifier le suivi de la cible, à partir des données transmises par les caméras et affichées sur ledit dispositif et, le cas échéant, d'alerter un service compétent via les moyens de communication dudit dispositif.

Un autre but de la présente invention est de proposer un dispositif de localisation de cible par un réseau de capteurs permettant de pallier au moins certains inconvénients de l'art antérieur. Un tel dispositif permet la mise en oeuvre de l'invention, seul ou en coopération avec d'autres dispositifs du même type.

Ce but est atteint par une caméra intelligente, couvrant au moins une zone géographique, et comportant des moyens de traitement de données, des moyens d'acquisition d'images, caractérisée en ce que les moyens de traitement de données implémentent au moins un algorithme pour la localisation de cible(s) par la mise en oeuvre du procédé selon au moins un mode de réalisation de l'invention où une seule caméra peut réaliser le suivi.

Selon une autre particularité, la caméra intelligente comporte des moyens de communication pour communiquer avec une autre caméra intelligente pour la mise en oeuvre du procédé selon au moins un mode de réalisation de l'invention où plusieurs caméras peuvent réaliser le suivi successivement ou en collaboration.

Selon une autre particularité, la caméra intelligente comporte des moyens de communication pour communiquer avec un dispositif de centralisation comportant des moyens de communication avec au moins une caméra et des moyens de mémorisation et/ou des moyens d'affichage pour, respectivement, le stockage et/ou l'affichage, de données relatives au suivi et/ou à ladite image acquise.

D'autres particularités et avantages de la présente invention apparaîtront plus clairement à la lecture de la description ci-après, faite en référence aux dessins annexés, dans lesquels :

- la figure 1 représente un mode de réalisation du système de localisation selon l'invention suivant une cible au cours du temps, avec un grossissement d'un capteur du réseau,
- la figure 2 représente un mode de réalisation du procédé de localisation selon l'invention,
- la figure 3 représente un modèle d'état dynamique dans le cas de 2 caméras implémentant en même temps le filtre variationnel.

La présente invention concerne un système et un procédé de suivi d'au moins une cible par un réseau de caméras intelligentes telles que définies précédemment. Ces caméras (S) intelligentes sont de localisations géographiques connues et comportent chacune des moyens (S1) de traitement de données mettant en oeuvre au moins un algorithme (AS, AD, AF) pour le suivi de cible(s), des moyens (S2) d'acquisition d'images et des moyens (S21) de communication. Le réseau de caméras (S) permet ainsi de couvrir au moins une zone géographique, dite région (Z), dans laquelle le traitement collaboratif réalisé par le réseau de caméras permet une surveillance efficace à faible coûts, notamment avec des caméras à ressources de calcul et de puissance limitées. Les moyens de communication pourront être des moyens filaire ou sans fil. De préférence, l'invention sera mise en oeuvre dans un réseau de caméras autonomes (i.e., ne nécessitant pas de système de niveau supérieur) qui implémentent l'invention de façon collaborative. Les moyens de traitement pourront être reconfigurables en fonction de l'évolution de la population de caméras.

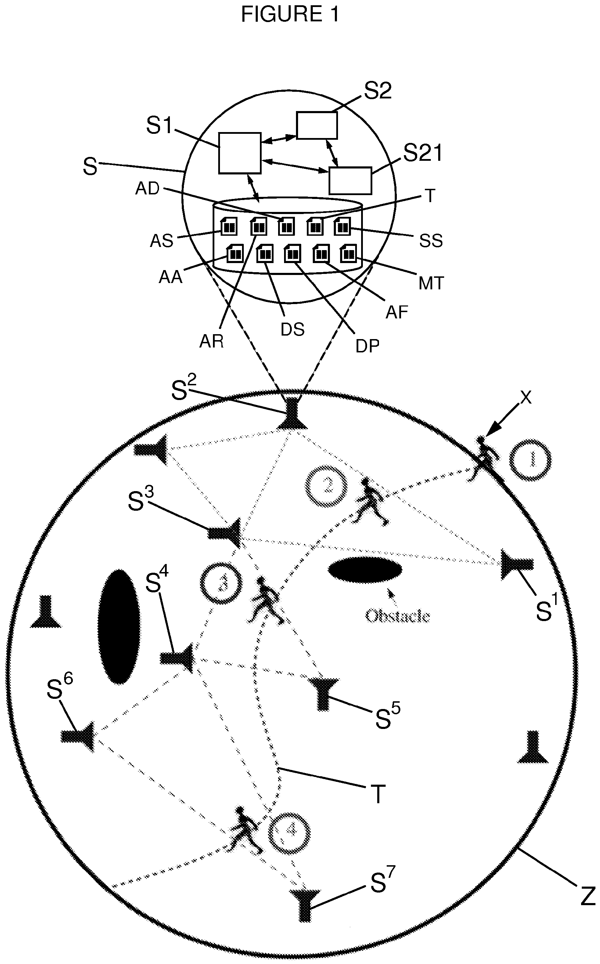

Le procédé comporte une détection (50) d'au moins une cible (X) dans la région (Z), par au moins une caméra (S) du réseau, grâce à au moins un algorithme (AD) de détection puis, pour chaque instant (t), une itération d'au moins une étape de suivi (55) de la cible (X) par au moins une caméra, dite active , grâce à au moins un algorithme (AF) de filtrage variationnel basé sur un filtre variationnel, par estimation (551) de la position de la cible (X) par une densité de probabilité. Le système comporte les caméras en réseau et les moyens (S1) de traitement de données implémentent au moins un algorithme (AS, AD, AF) pour la localisation de cible(s) par la mise en oeuvre du procédé selon l'invention. La figure 1 représente un exemple de réalisation d'un tel système.

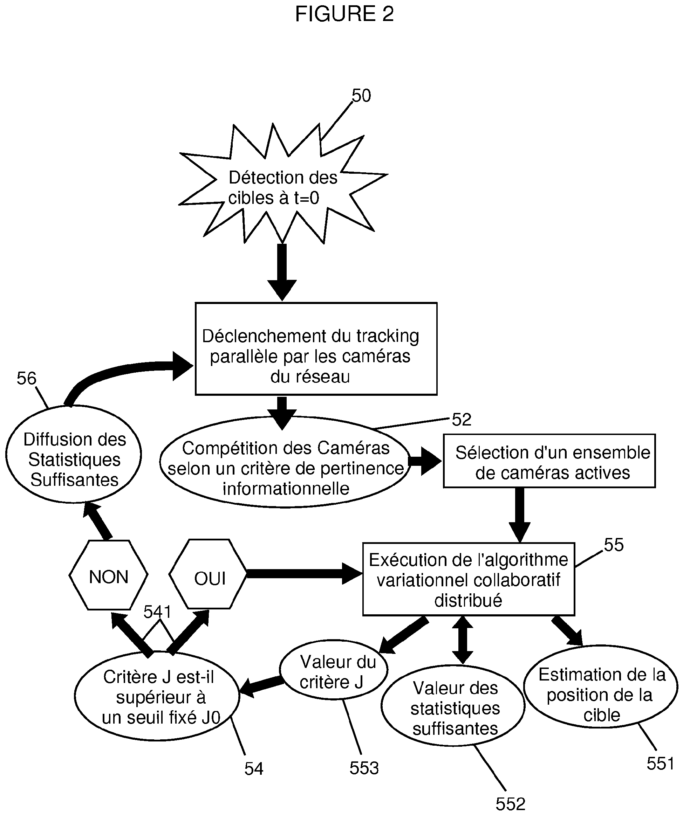

La figure 2 représente un exemple de réalisation du procédé. Dans ce mode de réalisation, l'étape de détection (50) d'au moins une cible (X) présente dans la région (Z), à un instant initial, déclenche le suivi (55) de la cible par toutes les caméras ayant détecté la cible (X), c'est-à-dire l'estimation de la position de la cible. Dans certains modes de réalisation, suite à cet instant initial où toutes les caméras ayant détecté la cible réalisent le suivi, une sélection des caméras actives (qui poursuivront le suivi) est réalisée à l'aide d'un calcul d'un indicateur (J) de pertinence représentant la pertinence de l'estimation de la position de la cible réalisé par chaque caméra. Ainsi, dans certains modes de réalisation, le procédé se poursuit par une étape de compétition (52) entre les caméras, en fonction de l'indicateur (J) de pertinence déterminé, pour sélectionner les plus pertinentes et former un ensemble (I) de caméras, dites actives, en charge du suivi (55) à l'instant (t) donné. L'étape de suivi (55) à un instant (t) donné, comporte en général également une étape de détermination (552) de données (SS) représentatives d'une statistique suffisante en termes temporel pour poursuivre le suivi de la cible (X) à l'instant (t+1) suivant. Dans certains modes de réalisation, le calcul de l'indicateur (J) de pertinence a lieu à chaque instant. Dans ce cas, l'étape de suivi (55) à un instant (t) donné, comporte également une étape de détermination (553) d'un indicateur (J) de pertinence du traitement réalisé, grâce à au moins un algorithme (AS) de sélection permettant de sélectionner les caméras qui poursuivront le suivi (et celles qui abandonneront le suivi). Dans certains modes de réalisation, l'étape de détermination (553) d'un indicateur (J) de pertinence du traitement réalisé (estimation réalisée) déclenche une étape de comparaison (54), par chaque caméra active à un instant (t) donné, de l'indicateur (J) de pertinence avec un seuil déterminé dans l'algorithme (AS) de sélection permettant à la caméra, en fonction du résultat de cette comparaison, de poursuivre le suivi (55) ou de l'abandonner en transmettant (56) aux autres caméras (S) du réseau ses données (SS) représentatives de la statistique suffisante en termes temporel déterminée par cette caméra. L'étape de comparaison (54), par chaque caméra active à un instant (t) donné, de son indicateur (J) de pertinence avec un seuil est, dans certains modes de réalisation, accompagnée d'une étape de comparaison (541) de l'évolution des indicateurs (J) de pertinence des autres caméras, pour tenir compte de cette évolution dans la décision entre la poursuite du suivi (55) et l'abandon. Par exemple, lorsque l'indicateur (J) de pertinence d'une caméra active décroît en dessous d'un seuil alors que celui des autres caméras reste supérieur au seuil, la caméra abandonne le suivi de la cible sans déclencher d'alerte dans le réseau. Par contre, lorsque le critère (J) décroît pour toutes les caméras actives, une alerte est diffusée dans le réseau afin de constituer un nouvel ensemble de caméras pertinentes. Ainsi, lorsque l'étape de comparaison (541) de l'évolution des indicateurs (J) des autres caméras se traduit par le fait que l'indicateur décroit pour plusieurs caméras, la transmission (56) des données (SS) représentatives de la statistique suffisante en termes temporel est accompagnée d'une réitération de l'étape de compétition (52) entre les caméras pour former un nouvel ensemble actif. Lorsque cet ensemble se construit, les caméras qui étaient actives abandonnent le suivi et passent la main pour que d'autres caméras qui seraient plus aptes à poursuivre la cible s'activent et réalisent le suivi. Dans le cas contraire, si aucune caméra n'est capable d'avoir un indicateur (critère) (J) de pertinence supérieur au seuil, les caméras n'abandonnent pas le suivi. L'étape de compétition (52) lancée lorsque l'étape de comparaison (541) de l'évolution des indicateurs (J) a déterminé que tous les indicateurs (J) décroissaient tient donc compte des indicateurs (J) de toutes les caméras (les caméras actives qui sont susceptibles de se désactiver et les caméras inactives qui sont susceptibles de s'activer), de façon à conserver les caméras les plus pertinentes.

Dans certains modes de réalisation, l'étape de suivi (55) comporte, à chaque instant (t), une itération d'une étape de prédiction de la (ou des) position(s) de la (ou des) cible(s) à l'instant suivant. Cette prédiction est permise par une estimation de la trajectoire (T) de la cible (X). Comme détaillé ci-après, l'étape d'estimation (551) grâce à l'algorithme (AF) de filtrage variationnel repose sur une utilisation d'un modèle (MT), dit de transition, reposant notamment sur une corrélation temporelle d'une trajectoire (T) supposée de la cible (X) d'un instant à l'autre. Une expression de ce modèle de transition (MT) par un mélange continu de gaussienne est détaillée ci-après et permet de définir la position prédite (estimée) de la cible (X) par une densité de probabilité. Les valeurs prises par les moyennes des densités de probabilité représentatives des positions successives de la cible permettent de définir une trajectoire (T) de la cible (X). De façon particulièrement avantageuse, comme détaillé ci-après, l'algorithme de filtrage variationnel permet que les données (SS) représentatives de statistiques suffisantes en termes temporel soient représentatives d'une moyenne et une covariance de la position estimée de la cible (X). La présente invention permet avantageusement de limiter à ces statistiques suffisantes en termes temporel l'envoi de données entre les caméras. Cette prédiction de la position de la cible peut donc comporter au moins une étape de détermination (552) de la statistique suffisante en termes temporel pour permettre de poursuivre le suivi. Ainsi, les caméras peuvent, au moins dans le cas où une seule caméra à la fois réalise le suivi à un instant (t) donné, ne s'envoyer entre elles que des données représentatives de cette information pertinente temporellement, de façon à économiser les transmissions de données et donc l'énergie consommée.

Dans le cas de plusieurs caméras activées en même temps pour réaliser un filtrage collaboratif, l'étape de suivi (55), par filtrage variationnel, à l'instant (t), est implémentée d'une manière collaborative en échangeant des données (SS) représentatives de statistiques suffisantes en termes spatial entre les caméras, en plus de celles en termes temporel. En effet, dans le cas de plusieurs caméras activées en même temps, elles pourront également s'échanger des données représentatives de statistiques suffisantes en termes spatial, telles que la distribution d'une position $x_t^s$ de la cible (X) dans l'image $y_t^s$ issue de chaque caméra (S) collaborant à un instant (t) donné, comme expliqué ci-après.

La figure 2 illustre la séquence suivante, représentative de certains modes de réalisation du procédé :

1. Détection/classification (50) d'objets à suivre (cible X) à l'instant t = 0.
2. Déclenchement du suivi (55) par les caméras (S) ayant détecté la cible.
3. Compétition (52) entre les caméras de l'ensemble en fonction de l'indicateur (J) détaillé ci-après (critère informationnel) pour la sélection d'un ensemble $I_t$ réduit de caméras actives en charge du suivi de la cible.
4. Suivi (55) de la cible par exécution de l'algorithme (AF) variationnel collaboratif, avec :

   (a) Estimation (551) de la position de la cible (X) avec un intervalle de confiance.
   (b) Détermination (552) d'au moins une statistique suffisante (SS) pour poursuivre le tracking à l'instant suivant.
   (c) Détermination (553) d'un indicateur (J) de pertinence du traitement réalisé.

5. Comparaison (54) : Si l'indicateur calculé à l'étape précédente est supérieur à un seuil fixé, la caméra poursuit le suivi, sinon, deux cas peuvent se présenter :

   a) Les indicateurs de toutes les caméras actives descendent en dessous du seuil fixé. Une alerte est diffusée dans le réseau pour former un nouvel ensemble de caméras actives. Si cet ensemble est formé, la statistique suffisante est communiquée et le procédé retourne au suivi (points 2 et 3 ci-dessus) pour remettre en compétition les caméras.
   b) Au moins une caméra de l'ensemble actif possède un indicateur supérieur au seuil. La(ou les) caméra(s) dont l'indicateur est passé sous le seuil abandonne(nt) alors le suivi sans déclencher d'alerte.

La présente invention propose donc, dans un mode de réalisation préféré, un système décentralisé et coopératif pour la détection/classification d'intrusion et le suivi d'objets mobiles à l'aide d'un réseau de caméras autonomes, miniatures et sans fil. Ce mode distribué présente l'avantage d'être particulièrement robuste aux attaques extérieures et à la défaillance de caméras puisqu'il est prévu que la perte de composants ne compromette pas l'efficacité du réseau dans son ensemble. La technique proposée repose sur une approche variationnelle s'accommodant des contraintes de communication en termes de débit et de puissance, tout en assurant un traitement robuste par rapport au bruit et au changement brusque de trajectoire. Cette technique repose sur une approximation de la vraie distribution de la position de la cible (par exemple $p(\alpha_t \mid y_{1..t})$ comme détaillé ci-après), difficile à estimer, par une fonctionnelle plus simple (par exemple $q(\alpha_t)$ comme détaillé ci-après) en minimisant l'erreur d'approximation (i.e., en cherchant la fonctionnelle approximante la plus proche de distribution réelle, la différence entre ces distributions fournissant un critère d'estimation).

Cette approximation permet de limiter la dépendance temporelle à la fonctionnelle d'une seule composante (comme détaillé ci-après pour la fonctionnelle q de la composante $\mu_t$ qui représente la distribution de la moyenne aléatoire utilisée comme statistique suffisante en termes temporels). Ainsi, la communication entre 2 caméras en charge de la mise à jour de la distribution de filtrage se trouve limitée à l'envoi des paramètres d'une seule gaussienne (la fonctionnelle $q(\mu_t)$ qui peut donc se limiter à une moyenne et une covariance). Ainsi, les approches classiques consistant à mettre à jour dans un premier temps les densités de probabilité et à les approximer dans un deuxième temps n'est plus nécessaire. Le protocole global de tracking collaboratif est fourni par l'algorithme (AF) de filtrage et repose sur le filtrage variationnel décrit ci-après.

Dans certains modes de réalisation particulièrement avantageux, un critère informationnel (indicateur ou critère J de pertinence détaillé plus loin) est proposé afin de définir la pertinence du traitement réalisé (i.e., le suivi de cible(s), c'est-à-dire l'estimation de la position au cours du temps) par une caméra donnée. En se basant sur ce critère de pertinence, un ensemble limité de caméras est sélectionné pour implémenter l'algorithme de suivi d'objets, réduisant ainsi davantage la consommation d'énergie. Certains modes de réalisation tirent avantage de diverses utilisations de ce critère de pertinence.

Dans certains modes de réalisation particulièrement avantageux, à chaque instant, les caméras activées d'une manière automatique exécutent l'algorithme de suivi (« tracking ») d'une manière collaborative, par la mise en oeuvre de l'algorithme de filtrage dans plusieurs caméras en même temps. Certains modes de réalisation tirent avantage de ce suivi collaboratif par la mise en oeuvre simultané du filtrage variationnel dans plusieurs caméras à un instant donné, en utilisant les statistiques suffisantes en termes temporels et des statistiques suffisantes en termes spatiaux, permettant de relativiser la position de la position d'une caméra à une autre. De manière particulièrement avantageuse, ces statistiques suffisantes en termes spatiaux peuvent être limitées à l'espérance de la position de la cible estimée par au moins une caméra.

La figure 1 illustre un exemple de fonctionnement d'un exemple de réseau de caméras sans fil pour la détection d'intrusion et le tracking d'une personne en mouvement :

- Période 1 : détection/classification de l'intrusion à l'instant initial.
- Période 2 : suivi de la personne par 3 caméras ($S^1$, $S^2$ et $S^3$) d'une manière collaborative.
- Période 3 : $S^1$ et $S^2$ détectent automatiquement la non pertinence de leurs images, elles diffusent les statistiques suffisantes et les caméras $S^3$, $S^4$ et $S^5$ s'auto-activent pour le suivi coopératif de la personne en mouvement.
- Période 4 : ce sont $S^4$, $S^6$ et $S^7$ qui prennent la relève pour le tracking de la personne.

La figure 1 montre également un grossissement d'une caméra (S, en l'occurrence la caméra $S^2$ sur la figure 1) pour faire apparaître les moyens (notamment S1, S2 et S21) qu'elle comporte.

On parle ici de filtrage variationnel car le filtrage bayésien a toujours pour but de calculer la probabilité d'une inconnue (ici la position de la cible) à partir de la connaissance de données. Ici, l'algorithme (AF) de filtrage variationnel repose sur un calcul variationnel dans lequel on dérive par une fonction car on dispose d'un critère (critère d'estimation correspondant à la différence entre la vraie distribution de la position de la cible et la distribution estimée à l'aide de la fonction d'approximation) dépendant d'une fonction (et non d'un vecteur) et on cherche la fonction (i.e., la fonctionnelle d'approximation) qui permet de minimiser ce critère d'estimation.

L'algorithme (AF) de filtrage variationnel est basé sur un filtre variationnel fournissant une estimation (551) de la position de la cible (X).

La prise en compte de modèles d'erreurs sur les statistiques échangées dans le traitement local au niveau de chaque noeud (chaque caméra (S) intelligente) représente une stratégie intéressante pour assurer un traitement efficace et robuste au niveau global du réseau. D'un point de vue méthodologique, l'approche variationnelle développée permet une prise en compte implicite de la propagation des erreurs d'approximation en mettant à jour les formes approximées des densités de probabilité dans un cadre non paramétrique. Le principe de la méthode variationnelle consiste à explorer tout l'espace d'état, en approximant la densité de probabilité par des fonctionnelles plus simples (par exemple, la densité de probabilité réelle $p(\alpha_t \mid y_{1..t})$ est approximée par $q(\alpha_t)$ comme détaillé ci-après). De plus, la modélisation de la dynamique de l'état caché par des densités à queues lourdes permet la détection et le suivi du système surveillé dans les cas difficiles comme par exemple un changement brusque de trajectoire. En effet, l'utilisation d'un simple modèle de transition gaussien dans les systèmes classiques n'autorise pas l'éventualité d'un saut de trajectoire. Par contre, l'utilisation de densités à queues lourdes autorise la réalisation d'événements rares de changement de trajectoire (T), comme un changement rapide de direction ou de vitesse par exemple.

En particulier, la dynamique de l'état du système $x_t$ peut être décrite par un modèle de mélange continu de gaussiennes (mean-scale mixture). Selon ce modèle, l'état caché $x_t \in \mathbb{R}^{n_x}$ suit une distribution gaussienne de moyenne aléatoire $\mu_t$ et de matrice de précision aléatoire $\lambda_t$. La moyenne suit une marche aléatoire gaussienne, traduisant la corrélation temporelle de la trajectoire de l'état caché du système. La matrice de précision suit une loi $W$ de Wishart :

$$\begin{cases} \mu_t \sim \mathcal{N}(\mu_t | \mu_{t-1}, \overline{\lambda}) \\ \lambda_t \sim \mathcal{W}_{\overline{n}}(\lambda_t | \overline{S}) \\ x_t \sim \mathcal{N}(x_t | \mu_t, \lambda_t) \end{cases} \tag{1}$$

où les hyperparamètres $\overline{\lambda}$, $\overline{n}$ et $\overline{S}$ sont respectivement la matrice de précision de la marche aléatoire, le degré de liberté et la matrice de précision de la distribution de Wishart.

On notera que l'expression (1) ci-dessus correspond à un modèle (MT), dit de transition, donnant un a priori sur la trajectoire (T) de la cible. Il convient de noter que l'aspect aléatoire de la moyenne et de la précision induit une distribution a *priori* marginale dont le comportement des queues peut être ajusté d'une manière simple selon les valeurs des hyperparamètres. De plus, une distribution à queues lourdes permet un suivi efficace de trajectoires présentant des sauts brusques, puisque le mélange de gaussiennes forme une densité de probabilité assez flexible pour ne pas écarter l'éventualité d'un événement rare.

Le filtre variationnel utilisé dans la présente invention repose donc sur un modèle de transition (MT) représenté par un mélange continu de gaussiennes et donnant un a priori sur la trajectoire supposée de la cible, en estimant la position de la cible par une densité de probabilité. Ce mélange continu de gaussiennes est obtenu en pratique en définissant un état caché « augmenté » (ou « étendu ») du système (cf. $\alpha_t = (x_t, \mu_t, \lambda_t)$ dont un exemple d'implémentation est détaillé ci-après), grâce à une distribution gaussienne de moyenne aléatoire $\mu_t$ et de matrice de précision aléatoire $\lambda_t$. Dans les méthodes de filtrage particulaire, une valeur fixe de la moyenne est déterminée à partir de la position précédente de la cible et une valeur fixe de la matrice de précision est déterminée selon la vitesse de déplacement. Ces valeurs n'évoluant pas au cours du suivi par un filtre particulaire, il est très probable que l'estimation qui en résulte soit défaillante, notamment dans le cas d'un changement de vitesse de déplacement de la cible. En revanche, dans la présente invention, l'approche variationnelle, en permettant l'estimation conjointe de la moyenne aléatoire (distribution gaussienne) et de la matrice de précision aléatoire, permet de mettre à jour ces valeurs au cours du suivi. Un filtre variationnel possède en effet une plus grande tolérance à l'augmentation des dimensions qu'un filtre particulaire et permet donc l'introduction de telles variables aléatoires à estimer tandis qu'un filtre particulaire divergerait car il n'est pas compatible avec une telle introduction.

La détection d'une cible peut être définie comme un problème de classification. Ainsi, l'algorithme de détection (AD) définit un ensemble de paramètres déterminés (ou critères) de détection/classification, appliqués sur les images acquises pour définir l'objet cible, comme connu dans l'art antérieur. De plus, il est possible d'appliquer une pluralité d'algorithmes de détection/classification différents et/ou d'appliquer l'algorithme (ou les algorithmes) sur plusieurs zones de détection au sein des images acquises. Cette détection revient à définir un « descripteur de référence » à l'instant initial. Ensuite, à chaque instant suivant, une fonction de vraisemblance (par exemple $p(y_t | x_t)$ comme détaillé ci-après), définie par la différence entre les données acquises (images) et le descripteur de référence, est utilisée pour le filtrage variationnel. En effet, la relation entre une image $y_t$ et la position d'une cible $x_t$ dans cette image est généralement complexe et ne peut être définie à l'avance. On exprime alors cette relation grâce à une fonction de vraisemblance qui est utilisée par le filtrage variationnel mis en oeuvre dans la présente invention. La vraisemblance est supposée avoir une forme générale qui est fonction du descripteur choisi, utilisé dans les caméras pour détecter les cibles. Un descripteur est une fonction d'extraction de caractéristiques du signal, comme par exemple un histogramme de couleur, un histogramme de gradient orienté, ou d'autres fonctions plus ou moins complexes connues dans le domaine du traitement de signal. Un descripteur est sensiblement équivalent à un modèle d'observation, c'est-à-dire en particulier une fonction de vraisemblance dans les exemples présentés ici. Cependant, dans le domaine du « tracking » vidéo, le terme descripteur est utilisé car il n'existe pas à proprement parler de modèle d'observation, l'essentiel étant de calculer la vraisemblance. Ici, par exemple, le descripteur peut extraire une caractéristique d'au moins un rectangle de l'image, contenant l'objet à poursuivre. La vraisemblance (par exemple $p(y_t | x_t)$ comme détaillé ci-après) d'un rectangle quelconque de l'image à l'instant courant (t) peut être définie comme une fonction décroissante de la distance entre le descripteur de ce rectangle et le descripteur du rectangle contenant l'objet détecté à l'instant initial (appelé aussi descripteur de référence). Par exemple, en utilisant l'histogramme de couleur comme descripteur, la vraisemblance d'un rectangle candidat de l'image à l'instant courant, consiste à calculer l'exponentiel de l'opposé de la distance de bhattacharya entre l'histogramme de couleur de ce rectangle et celui du rectangle de l'image initiale contenant l'objet détecté.

**Cas 1 : une seule caméra activée à l'instant t**

Il est possible, par exemple en fonction de la configuration de la région (Z), qu'une seule caméra (S) soit activée à l'instant courant (t) pour implémenter le filtrage variationnel. Selon le modèle (MT) de transition, l'état caché « augmenté » devient $\alpha_t = (x_t, \mu_t, \lambda_t)$. Au lieu d'approcher la distribution de filtrage $p(\alpha_t \mid y_{1..t})$ par un ensemble de particules pondérées comme dans le filtrage particulaire connu de l'art antérieur, le principe de l'approche variationnelle en ligne consiste à approcher cette distribution par une autre fonctionnelle plus simple $q(\alpha_t)$ en minimisant la divergence de Kullback-Leibler par rapport à la vraie distribution de filtrage :

$$D_{KL}(q \| p) = \int q(\alpha_t) \log \frac{q(\alpha_t)}{p(\alpha_t | y_{1..t})} d(\alpha_t) \qquad (2)$$

Par cette minimisation ci-dessus de la divergence de Kullback-Leibler avec les outils du calcul variationnel et en imposant une forme séparable (non paramétrique) $q(\alpha_t) = q(x_t)q(\mu_t)q(\lambda_t)$, on obtient la procédure itérative suivante :

$$\begin{cases} q(x_t) \propto exp(\log p(y_{1..t}, \alpha_t))_{q(\mu_t)q(\lambda_t)} \\ q(\mu_t) \propto exp(\log p(y_{1..t}, \alpha_t))_{q(x_t)q(\lambda_t)} \\ q(\lambda_t) \propto exp(\log p(y_{1..t}, \alpha_t))_{q(x_t)q(\mu_t)} \end{cases} \qquad (3)$$

Ainsi, la mise à jour de la fonctionnelle $q(\alpha_t)$ est implémentée d'une manière itérative. Il convient de noter que le calcul de $q(\alpha_t)$ est implémenté d'une manière séquentielle (dans le temps) en se basant uniquement sur la connaissance de $q(\mu_{t-1})$. En effet, en tenant en compte la forme séparable de la distribution à l'instant précédent (t-1), la distribution de filtrage s'écrit :

$$p(\alpha_t | y_{1..t}) \propto p(y_t | x_t) p(x_t, \lambda_t | \mu_t) \int p(\mu_t | \mu_{t-1}) q(\alpha_{t-1}) d\alpha_{t-1}$$
$$\propto p(y_t | x_t) p(x_t, \lambda_t | \mu_t) \int p(\mu_t | \mu_{t-1}) q(\mu_{t-1}) d\mu_{t-1} \qquad (4)$$

où seule l'intégration par rapport à $\mu_{t-1}$ est utilisée grâce à la forme séparable de $q(\alpha_{t-1})$. On se base ici sur la corrélation temporelle de la trajectoire (auto-corrélation) en utilisant la probabilité de la position de la cible à l'instant précédent. La dépendance temporelle est donc limitée dans la présente invention à la fonctionnelle d'une seule composante (le $q(\mu_{t-1})$ représentant la distribution de la moyenne aléatoire). En effet, la mise à jour de la fonctionnelle approximante $q(\alpha_t)$ est implémentée de manière séquentielle en prenant en compte uniquement la distribution précédente $q(\mu_{t-1})$ de la moyenne aléatoire. On notera ici qu'on retrouve la vraisemblance $p(y_t \mid x_t)$ dans l'expression de la distribution de filtrage.

Dans un contexte décentralisé, la communication entre 2 unités (i.e., « caméras intelligentes » ou « noeuds ») en charge de la mise à jour de la distribution de filtrage se trouve limitée à l'envoi de $q(\mu_{t-1})$ qui représente ainsi la statistique suffisante en terme temporel. Ce $q(\mu_{t-1})$ qui correspond à la distribution de la moyenne aléatoire de la position de la cible (X) à l'instant précédent, représente la connaissance de la trajectoire à l'instant précédent. A chaque instant courant (t), lors de la mise à jour du filtre variationnel, cette statistique temporelle est calculée de nouveau et représente alors la connaissance de la trajectoire à l'instant courant (t), pour être utilisée à l'instant suivant (t+1) pour poursuivre le suivi. On notera que dans le cas d'un filtrage particulaire, cette connaissance nécessite une pluralité de particules (et donc une quantité importante de données). De plus, un simple calcul permet de montrer que cette fonctionnelle est une gaussienne et donc que la communication entre deux « noeuds leaders » successifs (= caméras intelligentes actives d'un instant (t-1) précédent à l'instant (t) donné, ou par équivalence, d'un instant (t) donné à l'instant (t+1) suivant) se résume à l'envoi d'une moyenne et d'une covariance. Ainsi, l'approche classique particulaire consistant à mettre à jour dans un premier temps les densités de probabilité et à les approximer dans un deuxième temps n'est plus nécessaire. Ce traitement conjoint des données et de l'approximation des statistiques suffisantes est particulièrement avantageux en termes d'efficacité et de rapidité, mais également en termes de consommation d'énergie puisqu'il suffit de transmettre une moyenne et une covariance entre les caméras intelligentes.

**Cas 2 : plusieurs caméras activées à l'instant t**

Dans certains modes de réalisation, l'estimation peut être implémentée d'une manière collaborative par plusieurs caméras actives en même temps, grâce à une dépendance entre leurs filtres variationnels respectifs exprimée par un modèle dynamique d'homographie liant les moyennes aléatoires de la position de la cible (X) respectivement estimées par chacune des caméras actives.

Dans le cas précédent (1 seule caméra), l'aspect collaboratif se manifeste dans la dimension temporelle (changement de caméras et passage de statistiques suffisantes entre deux instants successifs). Dans le présent cas (plusieurs caméras simultanément activées), une solution naïve consisterait à choisir une seule caméra (caméra leader) qui reçoit toutes les images envoyées par les autres caméras et qui implémente exactement le filtrage variationnel décrit ci-dessus. Cependant, cette solution entraîne une consommation trop importante d'énergie pour la communication d'images. Dans certains modes de réalisation, on propose plutôt un filtrage variationnel distribué sur plusieurs caméras sans que les caméras envoient leurs images dans le réseau. Dans divers modes de réalisation de l'invention, les caméras communiquent uniquement des statistiques suffisantes entre elles. Dans le cas d'une seule caméra active à un instant courant, ces statistiques suffisantes concernent uniquement la dimension temporelle. Dans le cas où plusieurs caméras sont actives en même temps (réalisent le suivi), ces ces statistiques suffisantes concernent la dimension temporelle et la dimension spatiale, mais les caméras n'ont pas besoin de s'échanger plus de données que ces statistiques, qui sont donc désignées comme étant suffisantes (pour le suivi de la cible). Le principe de cette collaboration est basé sur un modèle dynamique de graphe dans lequel la cible possède des états (positions) dans chacune des caméras.

Afin d'illustrer cette collaboration d'une manière simple, prenons le cas de 2 caméras $S^1$ et $S^2$. La cible possède une position $x_t^1$ dans l'image $y_t^1$ issue de la première caméra $S^1$ et une position $x_t^2$ dans l'image $y_t^2$ issue de la deuxième caméra $S^2$. Entre les deux caméras, une transformation d'homographie permet de passer de $x_t^1$ à $x_t^2$.

Le modèle dynamique proposé est le suivant :

$$\begin{cases} \mu_t^1 \sim \mathcal{N}\left(\mu_t^1 | \mu_{t-1}^1, \bar{\lambda}\right) \\ \lambda_t^1 \sim \mathcal{W}_n\left(\lambda_t^1 | \bar{S}\right) \\ x_t^1 \sim \mathcal{N}\left(x_t^1 | \mu_t^1, \lambda_t^1\right) \end{cases} \qquad \begin{cases} \mu_t^2 \sim \mathcal{N}\left(\mu_t^2 | \mu_{t-1}^2, \bar{\lambda}\right) \\ \lambda_t^2 \sim \mathcal{W}_n\left(\lambda_t^2 | \bar{S}\right) \\ x_t^2 \sim \mathcal{N}\left(x_t^2 | \mu_t^2, \lambda_t^2\right) \end{cases} \qquad (5)$$

$$\mu_t^2 \sim \mathcal{N}\left(\mu_t^2 | \mathcal{H}\mu_t^1, \Sigma\right)$$

Où la dépendance entre les deux filtres variationnels est exprimée via le modèle d'homographie $\left(\mu_t^2 \sim \mathcal{N}\left(\mu_t^2 | \mathcal{H}\mu_t^1, \Sigma\right)\right)$.

Ce modèle d'homographie lie les moyennes aléatoires de la cible dans les 2 images issues des 2 caméras.

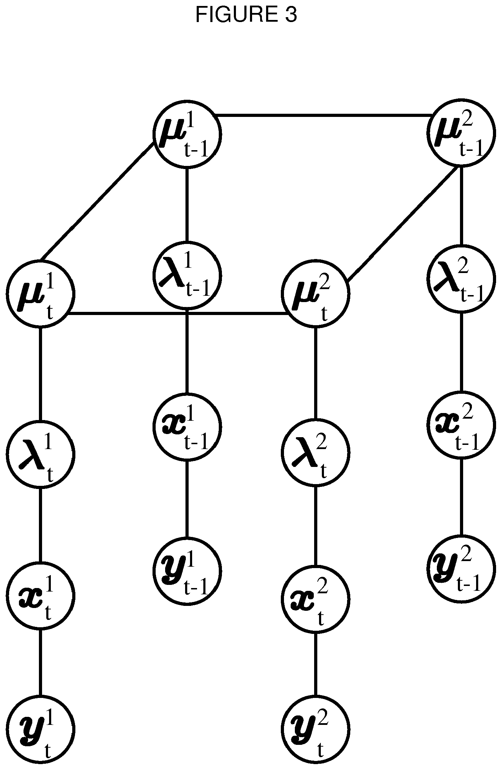

Le modèle dynamique peut par exemple être représenté comme illustré sur la figure 3.

La modélisation de la relation entre les images de la même cible uniquement par la transformation homographique $\mathcal{H}$ entre les moyennes permet d'implémenter un filtre variationnel parallèle sans la nécessité d'échanger les images entières $y_t^1$ et $y_t^2$ entre les caméras. En fait, considérons l'état augmenté $\left(a_t^1, a_t^2\right)$ ; Le filtre variationnel proposé consiste à approcher $p\left(a_t^1, a_t^2 | y_{1..t}\right)$ par la fonctionnelle séparable $q(x_t^1)q(\lambda_t^1)q(x_t^2)q(\lambda_t^2)q(\mu_t^1, \mu_t^2)$, en minimisant leur divergence de Kullback-Leibler, de manière similaire à l'approche pour une seule caméra, mais ici, chaque caméra collaborant à un instant donné, peut tenir compte du traitement réalisé par au moins une autre caméra. On obtiendra alors une procédure itérative similaire à celle implémentée dans le cas d'une seule caméra.

**Mise à jour du filtre variationnel**

Suite à l'étape de prédiction de la position permettant la détermination (552) de statistiques suffisantes en termes temporels, le filtre met à jour l'estimation de la position. On retrouve la fonction de vraisemblance $p(y_t \mid x_t)$ dans cette mise à jour du filtre variationnel.

On distingue à nouveau le cas où une seule caméra est active du cas où plusieurs caméras sont actives (2 dans l'exemple ci-dessous).

Cas d'un seul filtre (1 seule caméra active)

En substituant la distribution de filtrage de l'équation (4) ci-dessus dans l'équation (3) ci-dessus et en tenant compte le modèle de transition (MT) a priori, défini dans l'équation (1), la mise à jour de la distribution séparable $q(\alpha_t)$ possède la forme suivante :

$$q(x_t) \propto p(y_t \mid x_t) \mathcal{N}(x_t \mid \langle \mu_t \rangle, \langle \lambda_t \rangle)$$

$$q(\mu_t) \propto \mathcal{N}(\mu_t \mid \mu_t^*, \lambda_t^*)$$

$$q(\lambda_t) \propto \mathcal{W}_{n^*}(\lambda_t \mid S_t^*)$$

où les paramètres sont calculés d'une manière itérative selon le schéma suivant :

$$
\begin{aligned}
\mu_t^* &= \lambda_t^{*-1} \left( \langle \lambda_t \rangle \langle x_t \rangle + \lambda_t^p \mu_t^p \right) \\
\lambda_t^* &= \langle \lambda_t \rangle + \lambda_t^p \\
n^* &= \bar{n} + 1 \\
S_t^* &= \left( \langle x_t x_t^T \rangle - \langle x_t \rangle \langle \mu_t \rangle^T - \langle \mu_t \rangle \langle x_t \rangle^T + \langle \mu_t \mu_t^T \rangle + \bar{S}^{-1} \right)^{-1} \\
\mu_t^p &= \mu_{t-1}^* \\
\lambda_t^p &= \left( \lambda_{t-1}^{*-1} + \bar{\lambda}^{-1} \right)^{-1}
\end{aligned}
\qquad (6)
$$

On peut noter que la moyenne $\mu_t$ et la matrice de précision $\lambda_t$ possèdent des distributions connues ayant des espérances mathématiques simples :

$$\langle \mu_t \rangle = \mu_t^*, \langle \lambda_t \rangle = n^* S_t^*, \langle \mu_t \mu_t^T \rangle = \lambda_t^{*-1} + \mu_t^* \mu_t^{*T}$$

Cependant, la distribution de la composante $x_t$ ne possède pas une forme explicite simple. Afin de calculer son espérance mathématique et sa covariance, on fait appel à la technique d'échantillonnage d'importance (Monte Carlo) où des échantillons sont simulés selon la gaussienne $\mathcal{N}(x_t \mid \langle \mu_t \rangle, \langle \lambda_t \rangle)$ et pondérés ensuite avec leurs vraisemblances :

$$x^{(i)} \sim \mathcal{N}(x_t \mid \langle \mu_t \rangle, \langle \lambda_t \rangle), w_t^{(i)} \propto p\left( y_t \mid x_t^{(i)} \right) \qquad (7)$$

La moyenne et la covariance sont ensuite simplement obtenues par des moyennes empiriques :

$$\langle x_t \rangle = \sum_{i=1}^{N} w_t^{(i)} x_t^{(i)}, \langle x_t x_t^T \rangle = \sum_{i=1}^{N} w_t^{(i)} x_t^{(i)} x_t^{(i)T}$$

Notons que, contrairement au filtrage particulaire distribué, la procédure d'échantillonnage de Monte-Carlo, ci-dessus, reste locale au niveau de la caméra.

Cas de plusieurs filtres (plusieurs caméras actives)

En se basant sur le modèle dynamique (5) (cas de 2 caméras pour simplifier la présentation), le calcul variationnel se mène de la même façon que précédemment.

Les distributions de probabilité séparables de $(a_t^1, a_t^2)$ possèdent la forme suivante :

$$q(x_t^1) \propto p(y_t^1 | x_t^1) \mathcal{N}(x_t^1 | \langle \mu_t^1 \rangle, \langle \lambda_t^1 \rangle)$$

$$q(x_t^2) \propto p(y_t^2 | x_t^2) \mathcal{N}(x_t^2 | \langle \mu_t^2 \rangle, \langle \lambda_t^2 \rangle)$$

$$q(\lambda_t^1) \propto \mathcal{W}_{n*}(\lambda_t | S_t^1)$$

$$q(\lambda_t^2) \propto \mathcal{W}_{n*}(\lambda_t | S_t^2) \qquad\qquad (8)$$

$$q(\mu_t^1, \mu_t^2) \propto \mathcal{N}(\mu_t^1, \mu_t^2 | m_t^*, \Sigma_t^*)$$

Où le calcul des paramètres des lois de $(\lambda_t^1, \lambda_t^2, \mu_t^1, \mu_t^2)$ ne nécessite que la connaissance des statistiques $\langle x_t^1 \rangle$, $\langle x_t^1 x_t^{1T} \rangle$, $\langle x_t^2 \rangle$ et $\langle x_t^2 x_t^{2T} \rangle$ qui sont calculées localement dans chaque caméra et constituent des statistiques suffisantes en terme spatial pour les caméras implémentant le filtre variationnel de manière collaborative. On notera ici qu'on retrouve la vraisemblance $p(y_t | x_t)$ dans les expressions des distributions de filtrage.

Au moins 2 caméras du réseau pourront alors s'échanger des données (SS) représentatives de statistiques suffisantes en termes spatial $\langle x_t^{S^n} \rangle$, $\langle x_t^{S^n} x_t^{S^{n'}} \rangle$, en plus de celles en termes temporel décrites précédemment (dans le cas de 2 caméras, ces données seront exprimées sous la forme ci-dessus $\langle x_t^1 \rangle$, $\langle x_t^1 x_t^{2T} \rangle$, $\langle x_t^2 \rangle$ et $\langle x_t^2 x_t^{2T} \rangle$ des statistiques spatiales). Les données (SS) représentatives des statistiques suffisantes pourront donc, selon les cas et au cours du temps, comporter des données représentatives au moins des statistiques temporelles telles que celles mentionnées précédemment qui représentent la distribution de la moyenne aléatoire $q(\mu_{t-1})$ de la position estimée de la cible (X), et lorsque plusieurs caméras (S$^n$) sont actives en même temps et implémentent le filtre variationnel, des données représentatives des statistiques spatiales telles que $\langle x_t^{S^n} \rangle$, $\langle x_t^{S^n} x_t^{S^{nT}} \rangle$. On notera que les statistiques temporelles représentent la distribution de la moyenne aléatoire à l'instant précédent (t-1) alors que les statistiques spatiales représentent les espérances mathématiques des positions de la cible (X) dans l'image de chaque caméra active à l'instant courant (t). Pour les statistiques temporelles comme pour les statistiques spatiales, la dépendance (temporelle et spatiale, respectivement) concerne la moyenne aléatoire de la position de la cible.

**Détermination d'un indicateur (J) de pertinence, sélection des caméras actives :**

Comme mentionné précédemment, dans certains modes de réalisation, les caméras calculent un indicateur (J) de pertinence, défini dans un algorithme de sélection (AS) pour sélectionner les caméras actives qui doivent réaliser le suivi (le poursuivre ou l'abandonné, de l'instant courant à l'instant suivant). Cette sélection doit reposer sur un critère permettant d'évaluer et de comparer la pertinence des images acquises par la caméra vis-à-vis de l'objectif de tracking. Le principe sous-jacent est que si l'on arrive à prédire la position sans les données (image) de la caméra à l'instant courant (t), c'est qu'elle n'est pas pertinente et n'est donc pas nécessaire pour le suivi. On propose donc d'utiliser un critère informationnel mesurant la distance (différence) entre la densité de probabilité prédite (c'est-à-dire la probabilité de la position estimée $x_t$ à l'instant courant t, en connaissant les données jusqu'à l'instant précédent t-1) et la densité de probabilité mise à jour tenant compte des données (images) acquises à l'instant courant (c'est-à-dire la probabilité de la position estimée $x_t$ en connaissant les données jusqu'à l'instant courant t). Cet indicateur de pertinence représente donc la différence (distance ou divergence) entre la densité de probabilité de la position de la cible obtenue par le filtrage variationnel à l'instant précédent et la densité de probabilité de la position de la cible mise à jour à l'instant courant.

Dans certains modes de réalisation particulièrement avantageux, cet indicateur (J) de pertinence peut être calculé en utilisant des résultats issus du filtrage variationnel. Cette distance (ou différence) est mesurée par la divergence de Kullback-Leibler DKL. On obtient ainsi le critère suivant :

$$\mathcal{J}(c_i) = \mathcal{D}_{\mathcal{KL}}\left(p(x_t|y_{1:t}) \| p_{pred}(x_t|y_{1:t-1})\right) \qquad (9)$$

Ce calcul (9) du critère (J) de pertinence, faisant intervenir des intégrales inextricables, se base normalement sur un filtrage particulaire. Dans la présente invention, grâce à l'utilisation d'un filtrage variationnel, une simplification consiste à calculer le critère à l'instant courant et à se baser sur l'approximation variationnelle. Un calcul variationnel simple montre que la distribution prédictive $p_{pred}(x_t|y_{1t-1})$ peut être approximée par une gaussienne :

$$p_{pred}(x_t|y_{1:t-1}) \approx \mathcal{N}(x_t; \mu_{pred}, \lambda_{pred})$$

Le critère (J) calculé en (9) peut ainsi être simplement approché par l'expression suivante :

$$\mathcal{J}(c_i) \approx \mathcal{D}_{\mathcal{KL}}\left(q(x_t) \| q_{pred}(x_t)\right) \qquad (10)$$

$$\approx \sum_{j=1}^{n} w_t^{(i)} \log q\left(x_t^{(i)}\right) / q_{pred}\left(x_t^{(i)}\right)$$

où les échantillons $x_t^{(i)}$ et leurs poids $w_t^{(i)}$ ont déjà été obtenus lors de l'implémentation du filtrage variationnel.

On comprend donc que, dans le calcul de l'indicateur (J) de pertinence, on remplace le calcul des distributions réelles p et $p_{pred}$ par leur approximation variationnelle q et $q_{pred}$ obtenues grâce au filtrage variationnel.

Le critère (J) représente l'apport informationnel des images acquises par la caméra. En fait, la distance entre la densité prédite (sans prendre en compte l'image à l'instant t) et la densité mise à jour (en prenant en compte l'image à l'instant t) mesure l'apport de l'image acquise. Si cette distance est faible, c'est que les données de la caméra ne sont pas utiles pour suivre la cible et que la caméra n'est donc pas pertinente. Ce même critère (J) peut aussi être utilisé pour classer les caméras selon leurs pertinences et ainsi réaliser le processus de compétition (52) pour ne sélectionner que les caméras aptes à fournir les informations pertinentes pour le suivi (tracking) dans certains modes de réalisation.

L'homme de métier comprendra à la lecture de la présente demande que les divers modes de réalisation détaillés dans la présente description peuvent être combinés entre eux. Inversement, les caractéristiques techniques détaillées dans les divers modes de réalisation présentés à titre illustratif dans la présente demande peuvent générale-lement être isolées des autres caractéristiques de ces modes de réalisation dans la mesure où un filtrage variationnel est mis en oeuvre, à moins que l'inverse ne soit explicitement mentionné ou qu'il ne soit apparent qu'un tel isolement de caractéristique ne permette pas de répondre au problème du suivi de cible. En effet, le filtrage variationnel décrit ici permet d'utiliser ou non un indicateur (J) de pertinence, que le réseau comporte ou non plusieurs caméras et que le filtrage variationnel mis en oeuvre n'utilise qu'une seule caméra à la fois ou puisse utiliser plusieurs caméras en même temps.

Plusieurs aspects fonctionnels décrits dans la présente description sont désignés comme étant supportés par des « moyens de traitement » utilisant des algorithmes. On comprendra notamment à la lecture de la présente demande que les composants de la présente invention, comme généralement décrits et illustrés dans les figures, peuvent être arrangés et conçus selon une grande variété de configurations différentes. Ainsi, la description de la présente invention et les figures afférentes ne sont pas prévues pour limiter la portée de l'invention mais représentent simplement des modes de réalisation choisis. Par exemple, les moyens de traitement peuvent comporter des ressources informatiques et/ou au moins un circuit électronique, tel qu'un circuit intégré par exemple et/ou par d'autre types d'arrangement de composants, tels que par exemple des semi-conducteurs, des portes logiques, des transistors, un ou des processeur(s), ou d'autres composants discrets. De tels moyens de traitement peuvent également supporter une ou plusieurs application(s) logicielle(s) ou portion(s) de code exécutable(s) au sein d'au moins un environnement logiciel pour la mise en oeuvre des fonctionnalités décrites ici. Les fonctionnalités sont décrites en référence à des algorithmes pour illustrer que des moyens de traitement emploieront des moyens fonctionnels qui correspondent à des algorithmes de traitement, qui peuvent en fait être implémentés par exemple sous la forme d'instructions de code exécutable. Par exemple, les capteurs pourront comporter des moyens de mémorisation stockant au moins des données représentatives des algorithmes mais il est évident que, les capteurs pouvant être munis de moyens de communication, l'ensemble des données nécessaires à la mise en oeuvre de l'invention n'a pas à être nécessairement stocké dans les capteurs et peuvent n'être présentes que sous forme volatile et que les moyens de traitement pourront utiliser des données représentatives d'algorithmes ou de résultats de traitements basés sur ces algorithmes, en provenance d'une source extérieure, bien que la présente invention permet justement de ne pas nécessiter ce type d'agencement puisqu'elle réduit la puissance de calcul nécessaire et les coûts en termes de traitement de données et de communication, ce qui la rend particulièrement adaptée à des réseaux de capteurs isolés à ressources énergétiques limitées et peu ou pas renouvelables. On comprend donc que l'invention est de préférence implémentée sous la forme de caméras intelligentes comportant de l'électronique embarquée pour réaliser les calculs et qu'elles ne nécessitent pas de système central car elles forment un réseau autonome. Cependant, il n'est pas nécessaire que ce réseau autonome soit complètement indépendant d'un système central. Certains modes de réalisation prévoiront des communications vers au moins un dispositif de centralisation, comme détaillé ci-après.

De plus, un ou plusieurs bloc(s) physique(s) ou logique(s) d'instructions machine peuvent, par exemple, être organisés en objet, procédé, ou fonction. De plus, les routines et instructions utilisées par ces moyens de traitement n'ont pas besoin d'être physiquement localisés ensemble, mais peuvent comporter des instructions disparates stockées dans différents endroits qui, une fois réunis fonctionnellement et logiquement ensemble, forment l'algorithme mis en oeuvre par des moyens de traitement tel que décrit ici, pour réaliser la fonction indiquée pour l'algorithme. Une instruction simple de code exécutable, ou une pluralité d'instructions, peut en fait être distribuée parmi plusieurs différents segments de code ou parmi différents programmes et stockée dans plusieurs blocs de mémoires. De même, des données opérationnelles peuvent être identifiées et illustrées dans des moyens de traitement, et peuvent être incorporées sous n'importe quelle forme appropriée et être organisées dans n'importe quel type approprié de structure de données. Les données opérationnelles peuvent être rassemblées ou peuvent être réparties sur différents endroits incluant différents dispositifs de stockage finis, et peuvent exister, au moins partiellement, simplement en tant que signaux électroniques sur un système ou un réseau. On désigne parfois ici le dispositif comme comportant des moyens de traitement dans certains modes de réalisation, mais l'homme de métier comprendra qu'il peut en fait être associé à de tels moyens ou les inclure dans sa structure, bien qu'il soit dans le présent cas plus avantageux qu'il les inclue dans sa structure puisque les traitements qu'il réalise permettent de minimiser la quantité de données qui doivent transiter via les moyens de communication. Le dispositif comporte des moyens de traitement de données permettant de réaliser les fonctions décrites et pourra donc comporter (ou être associé à) des circuits spécifiques réalisant ces fonctions ou comporter (ou être associé à), d'une manière générale, des ressources informatiques permettant d'exécuter des instructions remplissant les fonctions décrites dans la présente demande. L'homme de métier comprendra que de nombreuses variantes de réalisation sont possibles en plus des variantes de réseau autonome de caméras à électronique embarquée permettant de réaliser toutes les fonctions décrites dans la présente demande qui sont les plus avantageuses pour une pluralité de raisons déjà mentionnées.

L'invention peut avantageusement être implémentée dans un réseau de caméras ayant des ressources et donc un coût de production limités, grâce à la rapidité et la simplification permises par les algorithmes décrits ici. Comme mentionné précédemment, le réseau de caméras intelligentes selon l'invention est dit autonome car dans les modes de réalisation préférés, ces caméras embarquent des moyens de traitement et de communication en plus des moyens d'acquisition d'images et coopèrent en parfaite autonomie pour réaliser le suivi. De plus, des moyens d'alimentation en énergie peuvent être inclus dans ces caméras (comme des batteries par exemple) de façon à éviter leur alimentation par un réseau d'alimentation en électricité. Cependant, on comprendra que chacune des caméras de ce réseau peut communiquer avec au moins un dispositif, dit de centralisation, qui pourra centraliser au moins une partie des données traitées. Par exemple un tel dispositif (ou système) pourra consister ou comporter au moins terminal comprenant des moyens de communication et des moyens de mémorisation, et éventuellement des moyens de traitement de données. Ce terminal pourra par exemple être portable (tel qu'un ordinateur portable ou tout type de terminal, même à puissance de calcul plus limitée comme un « PDA », un « smartphone » ou un terminal dédié). Ainsi, les caméras pourront envoyer à ce dispositif de centralisation au moins une partie de données qu'elles ont traitées (données des images, données relatives au suivi, etc...) pour leur archivage dans les moyens de mémorisation de ce dispositif de centralisation. De même, le dispositif de centralisation pourra comporter au moins un terminal permettant à un opérateur de suivre le résultat du traitement réalisé par le réseau de caméra ou de suivre au moins une partie des images acquises, par exemple choisies pendant le suivi. Par exemple, un affichage de la trajectoire et/ou des caméras activées au cours du temps et/ou d'au moins une image acquise (par exemple par une caméra sélectionnée sur la base de sa localisation par rapport à la cible, comme expliqué ci-après) pourra être réalisé sur un tel terminal. De même, le réseau pourra avoir été configuré pour transmettre une alerte à un service approprié (sécurité, police, etc.) et le dispositif de centralisation pourra alors simplement comporter des moyens d'avertir les personnes concernées par l'alerte. Dans un autre exemple, le dispositif de centralisation comporte des moyens de traitement permettant de traiter les données reçues du réseau de caméras et de gérer divers affichage à présenter à un opérateur sur un dispositif d'affichage. Une interface graphique utilisateur et des moyens de saisie (clavier, souris, écran tactile, etc.) du dispositif de centralisation permettront à l'opérateur d'interagir avec le dispositif et contrôler par exemple les données que les caméras du réseau envoient vers le dispositif de centralisation. Ainsi, un affichage, par exemple en temps réel, permet à un opérateur de vérifier et confirmer l'alerte, par exemple via un terminal portable, par exemple en transmettant l'alerte aux services concernés. Par exemple, une cible est suivie par le réseau et l'opérateur reçoit au moins une image d'au moins une des caméras lui montrant la cible. Dans une variante, l'opérateur a alors le choix de valider au moins une image, par exemple pour qu'elle soit stockée dans les moyens de mémorisation du dispositif de centralisation. Dans d'autres variantes, le réseau de caméras sera configuré pour qu'au moins une des caméras pertinentes pendant le suivi garde, dans des moyens de mémorisation embarqués (par exemple une mémoire flash, nécessitant peu d'énergie), au moins une image de la cible suivie. En variante, cette (ou ces image(s) sera (ou seront) stockée(s) dans le dispositif (ou système ou terminal) de centralisation. Dans certains modes de réalisation, que le réseau soit associé ou non à un dispositif de centralisation, le réseau de caméras intelligentes pourra être configuré pour la prise de vue de la cible par au moins une des caméras réalisant le suivi à un instant donné, en se basant sur la trajectoire (T) estimée de la cible (décrite précédemment). Ainsi, par exemple, grâce à la connaissance des coordonnées et/ou de la trajectoire estimées de la cible, le réseau de caméras de localisations géographiques connues peut décider de celle(s) qui est (ou sont) la (ou les) mieux placée(s) pour faire une prise de vue de la cible (une photo ou une vidéo, par exemple de courte durée). Dans une variante, les coordonnées et/ou la trajectoire pourront également être utilisées pour sélectionner au moins une zone utile dans laquelle se trouve une cible au sein de l'ensemble de la vue captée par la (ou les) caméra(s) sélectionnée(s) pour la prise de vue. On minimise ainsi les données à stocker et/ou à transmettre tout en garantissant que la cible est présente et sans dégrader la qualité de l'image. Pour minimiser davantage, la résolution pourra également être réduite par la caméra. Dans une variante, la prise de vue réalisée pourra être transmise à un dispositif de centralisation pour affichage à un opérateur qui valide l'enregistrement de la prise de vue, par exemple en fonction de sa pertinence (par exemple pour éviter de stocker des images d'animaux qui se seraient introduits dans les lieux surveillés et qui auraient déclenché le suivi et ces prises de vues).

La présente demande réfère à « une localisation géographique connue » des caméras. L'homme de métier comprendra à la lecture de la présente demande que la localisation des caméras est considérée comme étant fixe car les caméras s'envoient des informations concernant la cible mais pas les positions des caméras elles-mêmes. En fait, on désigne donc ici par l'expression « localisation géographique connue » le fait que les caméras connaissent les positionnements respectifs de leurs « champs de vision ». Les caméras utilisées ont une position fixe et, de préférence, un « champ de vision » fixe (c'est-à-dire que la zone géographique couverte par une caméra ne varie pas au cours du temps). Une caméra donnée n'envoie en fait que des informations sur la position de la cible dans son propre champ de vision, utilisée avantageusement par d'autres caméras pour retrouver la cible dans leur champ de vision selon certains modes de réalisation. En fait, la position exacte des caméras n'est pas une information utile mais l'information définissant si deux caméras ont des champs de vision (i.e., zone géographique couverte) se recouvrant au moins partiellement ou correspondant à des zones voisines ou éloignées d'un site (une région (Z) surveillée) est utilisée dans divers modes de réalisation de l'invention. Ainsi, lorsque l'invention comporte un réseau de caméras, ces dernières ont une « localisation géographique connue » en ce sens qu'elles savent chacune si une caméra voisine partage une partie de son champ de vision ou si le champ de vision d'une caméra voisine est situé à proximité du sien ou s'il est distant. Dans les modes de réalisation où une seule caméra couvre la région (Z) à surveiller (cf. ci-après), cette « localisation géographique connue » n'est pas nécessaire.

De plus, lorsqu'au moins deux caméras ont des champs de vision qui se recouvrent au moins partiellement (i.e., les zones géographiques couvertes par au moins deux caméras possèdent au moins une portion commune), l'invention utilise avantageusement une transformation homographique de la position de la cible entre les caméras.

Ainsi, grâce à cette homographie, une caméra est capable de retrouver la position de la cible dans son champ de vision à partir de l'information relative à une position de la cible dans le champ d'une autre caméra qui lui transmet cette information. L'invention ne nécessite pas que cette transformation homographique soit très précise car l'utilisation des données probabilistes permet de tolérer une relative imprécision. D'autre part, l'invention permet éventuellement, même dans les cas où deux caméras ont des champs qui se recouvrent, qu'une caméra qui perd la cible (i.e., dont la cible quitte le champ de vision) puisse envoyer une alerte aux autres caméras pour qu'elles tentent de détecter la cible. Dans les cas où deux caméras ont des champs de vision qui ne se recouvrent pas mais qui sont voisins, l'alerte envoyée par la caméra qui perd la cible pourra n'être adressée qu'à la (ou aux) caméra(s) voisine(s) dans le(s) champ(s) de laquelle (ou desquelles) la cible est susceptible d'entrer (ou est entrée). De même, dans le cas de caméras dont les champs se recouvrent au moins partiellement, cette alerte pourra être limitée aux caméras dont le champ de vision se recouvre au moins partiellement avec celui quitté par la cible (i.e., de la caméra qui diffuse l'alerte) et peut être accompagnée de l'information relative à la position de la cible dans le champ de la caméra dont la cible quitte le champ de vision, qui permettra, grâce à la transformation d'homographie, à une autre caméra de retrouver la position de la cible dans la partie de son champ de vision qui se recouvre avec celle lui ayant transmis l'information. Ainsi, ce mécanisme d'alerte permet aux caméras, d'une part, de tenter de détecter la cible, puis de relancer le suivi comme décrit dans la présente demande et, d'autre part, de calculer la position de la cible dans leur champs à partir de la position dans le champ d'une caméra voisine, lorsque leurs champs de vision respectifs se recouvrent sur au moins une partie. On comprend également que ce mécanisme d'alerte permet même que la localisation géographique connue ne soit pas nécessaire. En effet, dans certains modes de réalisation, une caméra qui perd la cible envoie une alerte systématiquement aux autres caméras pour qu'elle détecte la cible et poursuive le suivi. Ainsi, quelque soit les positionnements respectifs des caméras (et en particulier de leurs champs de vision), l'invention pourra tout de même être mise en oeuvre de façon efficace au moins pour le suivi individuel. En revanche pour le suivi collaboratif, la transformation homographique définit déjà en elle-même le fait que les localisations géographiques sont connues (au sens où on l'entend ici ; c'est-à-dire par le fait que les caméras connaissent les correspondances éventuelles entres leurs champs de vision).

En pratique, la transformation d'homographie entre deux caméras peut être définie à l'avance grâce à l'établissement d'une correspondance d'au moins deux points dans au moins une portion commune de leurs champs de vision. Ainsi, lors du déploiement du réseau de caméras intelligentes, on enregistre dans ces dernières des données représentatives de la correspondance entre leurs champs de vision. Le modèle dynamique d'homographie $\mathcal{H}$ liant les moyennes aléatoires de la position de la cible (X) respectivement estimées par chacune des caméras actives, décrit dans la présente demande pourra donc être utilisés par les caméras pour trouver la correspondance de la position de la cible dans leurs images respectives. Dans les cas où une seule caméra réalise le suivi à un instant donné mais où le réseau comporte plusieurs caméras, le modèle d'homographie $\mathcal{H}$ (comme détaillé dans la présente demande) permet à une seconde caméra de retrouver la cible dans son champ de vision uniquement à partir des statistiques suffisantes en termes temporels fournies par une première caméra.

Ainsi, selon divers modes de réalisation, les caméras sont de localisations géographiques connues grâce au fait que leurs moyens (S1) de traitement utilisent des données représentatives des positionnements relatifs de leurs champs de vision respectifs. Par exemple, les caméras ont des localisations géographiques connues en ce qu'elles stockent des données représentatives de l'information définissant les positionnements relatifs de leurs champs de vision respectifs (par exemple par des informations telle que « champs communs, au moins partiellement » et/ou « champ voisins » et/ou « champs éloignés »). La présente demande détaille des algorithmes pour le suivi individuel de cible (une seule caméra à la fois) et pour le suivi collaboratif (plusieurs caméras). On notera que dans le cas où au moins deux caméras ont des champs qui se recouvrent au moins partiellement, le réseau peut néanmoins être configuré pour qu'une seule caméra à la fois réalise le suivi individuel. Dans ce cas, au lieu que les deux caméras dont les champs se recouvrent fasse le suivi collaboratif en même temps lorsque la cible est dans la portion commune de leurs champs de vision, une seule caméra (par exemple celle dans le champ de laquelle la cible est entrée en premier) réalise le suivi et lorsqu'elle perd la cible, elle envoie l'information de position estimée de la cible à la voisine qui, sachant que son champ de vision se recouvre avec celle qui lui transmet l'information et connaissant la transformation homographique à réaliser à partir de la position qui lui est transmise, peut calculer la position de la cible dans son propre champ de vision, pour poursuivre le suivi. On comprend donc que les transformations d'homographie décrites dans la présente demande peuvent être avantageusement utilisées pour le suivi collaboratif par plusieurs caméras, mais également pour un suivi successif individuel par plusieurs caméras.

On comprend de ce qui précède que le réseau de caméras selon l'invention permet de nombreuses utilisations connues dans le domaine de la surveillance (alerte à un service, envoi d'image) mais permet également de nombreuses fonctionnalités particulièrement avantageuses par rapport aux systèmes de surveillance classiques. En particulier, l'invention permet de faire des prises de vues qui peuvent être conservées mais permet d'en limiter le nombre si on le souhaite et de limiter les quantités de données qui transitent dans le réseau au cours du suivi, et même lors de prises de vues des cibles suivies (en choisissant au moins une caméra placée d'une manière optimale et/ou en choisissant une zone utile pour la prise de vue, etc.).

On comprend également à la lecture de la présente demande que l'invention peut donc concerner au moins une caméra intelligente couvrant au moins une zone géographique, comportant des moyens de traitement de données, des moyens d'acquisition d'images et des moyens de communication, caractérisée en ce que les moyens de traitement de données implémentent au moins un algorithme pour la localisation de cible(s) par la mise en oeuvre de l'invention, en particulier par le filtrage variationnel décrit dans la présente demande. Une telle caméra intelligente est de préférence destinée à être utilisée en collaboration avec d'autres caméras du même type, de manière à former un réseau comme décrit précédemment couvrant une région déterminée. Cependant, dans certains modes de réalisation, une telle caméra intelligente peut être utilisée isolément (il ne s'agit alors pas réellement d'un réseau puisqu'il n'y a qu'une seule caméra et la région qu'elle couvre correspond alors simplement le champ couvert par ses moyens d'acquisition) et ne pas comporter de moyens de communication (elle utilisera alors la statistique suffisante temporelle qu'elle aura elle-même calculé à un instant donné pour poursuivre le suivi à l'instant suivi). De plus, une telle caméra isolée ne nécessite pas de connaître sa localisation. Dans certains modes de réalisation, une telle caméra intelligente isolée pourra comporter des moyens de communication pour transmettre des données vers un terminal de centralisation comme décrit précédemment. Une telle caméra isolée communicante ne nécessite pas non plus une connaissance de sa localisation.

Enfin, les équations détaillées ici sont une forme d'expression particulièrement adaptée à la mise en oeuvre de l'invention, mais l'homme de métier appréciera les adaptations possibles de la formulation mathématique pour obtenir les mêmes fonctions et avantages que ceux décrits ici pour les algorithmes. De façon particulièrement avantageuse, les expressions mathématiques fournies ici permettent aux algorithmes (notamment grâce aux simplifications et approximations réalisées) d'être exécutés très rapidement en nécessitant peu de ressources (de calcul, et donc d'énergie). Dans certains modes de réalisation, les algorithmes mis en oeuvre (implémentés dans le réseau de caméras et/ou pour la mise en oeuvre du procédé) reposeront donc sur les calculs et équations détaillés ici qui sont particulièrement adaptées aux buts de limiter les ressources de calculs et énergétiques des caméras intelligentes du réseau (et/ou des capacités de transmission des moyens de communication).

D'une manière générale, les divers modes de réalisation, variantes et exemples décrits ici, notamment pour des caractéristiques techniques particulières de l'invention peuvent être combiné(e)s ensemble à moins que l'inverse ne soit expressément mentionné dans la présente demande ou qu'ils (ou elles) ne soient incompatible ou que la combinaison ne fonctionne pas. D'autre part, il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de suivi d'au moins une cible (X) par un réseau de caméras (S) intelligentes, comportant chacune des moyens (S1) de traitement de données mettant en oeuvre au moins un algorithme (AS, AD, AF) pour le suivi de cible(s), des moyens (S2) d'acquisition d'images et des moyens (S21) de communication, le réseau de caméras (S) couvrant au moins une zone géographique, dite région (Z), le procédé de suivi comporte une détection (50) d'au moins une cible (X) dans la région (Z), par au moins une caméra (S) du réseau, grâce à au moins un algorithme (AD) de détection puis, pour chaque instant (t), une itération d'au moins une étape de suivi (55) de la cible (X) par au moins une caméra, dite active, grâce à au moins un algorithme (AF) de filtrage variationnel basé sur un filtre variationnel, utilisant :

   - une fonction de vraisemblance de la position de la cible (X) dans l'image acquise par ladite caméra active, définissant la relation entre une image et la position de la cible (X) dans cette image ; et
   - un modèle (MT), dit de transition, représenté par un mélange continu de gaussiennes et reposant sur une corrélation temporelle d'une trajectoire (T) de la cible (X) d'un instant à l'autre, en mettant en oeuvre une estimation (551) de la position de la cible (X) dans les images par une densité de probabilité

   **caractérisé en ce que** l'étape de suivi (55) à un instant (t) donné, comporte également une étape de détermination (553) d'un indicateur (J) de pertinence de l'estimation (551) de la position de la cible (X), grâce à au moins un algorithme (AS) de sélection permettant la sélection d'au moins une caméra (S) active pour réaliser le suivi, en fonction de son indicateur (J) de pertinence qui représente la différence entre la densité de probabilité de la position de la cible prédite à l'instant précédent et la densité de probabilité de la position de la cible estimée à l'instant courant.

**2.** Procédé selon la revendication 1, **caractérisé en ce que** l'étape de suivi (55) à un instant (t) donné, comporte également une étape de détermination (552) de données (SS) représentatives d'une statistique suffisante en termes temporel, représentant la connaissance de la trajectoire (T), pour poursuivre le suivi de la cible (X) à l'instant (t+1) suivant.

**3.** Procédé selon la revendication 1 ou 2, **caractérisé en ce que** l'étape de détection (50) d'au moins une cible (X) présente dans la région (Z), à un instant initial, déclenche le suivi (55) de la cible par toutes les caméras ayant détecté la cible (X), puis une étape de compétition (52) entre les caméras, en fonction de l'indicateur (J) de pertinence déterminé, pour sélectionner les plus pertinentes et former un ensemble (I) de caméras, dites actives en charge du suivi (55) à l'instant (t) donné.

**4.** Procédé selon l'une des revendications précédentes, **caractérisé en ce que** l'étape de détermination (553) d'un indicateur (J) de pertinence du traitement réalisé déclenche une étape de comparaison (54), par chaque caméra active à un instant (t) donné, de l'indicateur (J) de pertinence avec un seuil déterminé dans l'algorithme (AS) de sélection permettant à la caméra, en fonction du résultat de cette comparaison, de poursuivre le suivi (55) ou de l'abandonner.

**5.** Procédé selon la revendication 4, **caractérisé en ce que** l'étape de comparaison (54), par chaque caméra active à un instant (t) donné, de son indicateur (J) de pertinence avec un seuil est accompagné d'une étape de comparaison (541) de l'évolution des indicateurs (J) de pertinence des autres caméras, pour tenir compte de cette évolution dans la décision entre la poursuite du suivi (55) et l'abandon, et décider s'il y a lieu de transmettre (56) aux autres caméras (S) du réseau ses données (SS) représentatives de la statistique suffisante déterminée par cette caméra, cette transmission (56) déclenchant la réitération de l'étape de compétition (52) entre les caméras pour former un nouvel ensemble lorsque l'indicateur (J) de pertinence de toutes les caméras croise le seuil.

**6.** Procédé selon une des revendications 1 à 5, **caractérisé en ce que** l'étape de suivi (55) comporte, à chaque instant (t), une itération d'une étape de prédiction (552) de la (ou des) position(s) de la (ou des) cible(s) à l'instant suivant.

**7.** Procédé selon une des revendications 1 à 6, **caractérisé en ce que** les données (SS) représentatives de statistiques suffisantes en termes temporel sont représentatives d'une moyenne et une covariance de la moyenne aléatoire de la position estimée de la cible (X).

**8.** Procédé selon une des revendications 1 à 7, **caractérisé en ce que** les caméras sont de localisations géographiques connues grâce au fait que leur moyens (S1) de traitement utilisent des données représentatives des positionnement relatifs de leurs champs de vision respectifs.

**9.** Procédé selon la revendication 8, **caractérisé en ce que** l'étape de suivi (55), par filtrage variationnel, à l'instant (t), lorsque plusieurs caméras sont activées, est implémentée d'une manière collaborative par les caméras actives, grâce à une dépendance entre leurs filtres variationnels respectifs exprimée par un modèle dynamique d'homographie liant les moyennes aléatoires de la position de la cible (X) respectivement estimées par chacune des caméras actives.

**10.** Procédé selon la revendication 9, **caractérisé en ce que** le suivi est réalisé de manière collaborative par les caméras actives en échangeant des données (SS) représentatives de statistiques suffisantes en termes spatial entre les caméras, en plus de celles en termes temporels, ces statistiques suffisantes en termes spatial représentant les espérances mathématiques des positions de la cible (X) dans l'image de chaque caméra active à l'instant courant (t).

**11.** Système de suivi d'au moins une cible (X) par un réseau de caméras (S) intelligentes, comportant chacune des moyens (S1) de traitement de données, des moyens (S2) d'acquisition d'images et des moyens (S21) de communication, le réseau de caméras (S) couvrant au moins une zone géographique, dite région (Z), **caractérisé en ce que** les moyens (S1) de traitement de données implémentent au moins un algorithme (AS, AD, AF) pour la localisation et le suivi de cible(s) par la mise en oeuvre du procédé selon l'une des revendications précédentes.

**12.** Système selon la revendication 11, **caractérisé en ce qu'**au moins un algorithme (AF) utilisé est basé sur un filtre variationnel permettant de minimiser les données échangées entre les caméras pour le suivi à une moyenne et une covariance.

**13.** Système selon l'une des revendications 11 et 12, **caractérisé en ce qu'**au moins une image est acquise au cours du suivi par au moins une des caméras, sélectionnée en fonction de sa position par rapport aux coordonnées et/ou à la trajectoire de la cible.

14. Système selon la revendication 13, **caractérisé en ce que** ladite image, acquise par au moins une caméra sélectionnée pour sa position, est stockée dans des moyens de mémorisation de cette même caméra.

15. Système selon l'une des revendications 11 à 14, **caractérisé en ce qu'**il comporte au moins un dispositif de centralisation comportant des moyens de communication avec les caméras du système et des moyens de mémorisation et/ou des moyens d'affichage pour, respectivement, le stockage et/ou l'affichage, de données relatives au suivi et/ou à ladite image acquise, transmises par les caméras.

16. Système selon la revendication 15, **caractérisé en ce que** le dispositif de centralisation comporte des moyens de saisie permettant à un opérateur de vérifier le suivi de la cible, à partir des données transmises par les caméras et affichées sur ledit dispositif et, le cas échéant, d'alerter un service compétent via les moyens de communication dudit dispositif.

17. Caméra intelligente, couvrant au moins une zone géographique, et comportant des moyens de traitement de données, des moyens d'acquisition d'images, **caractérisée en ce que** les moyens de traitement de données implémentent au moins un algorithme pour la localisation de cible(s) par la mise en oeuvre du procédé selon une des revendications 1 à 7.

18. Caméra intelligente selon la revendication précédente, **caractérisée en ce qu'**elle comporte des moyens de communication pour communiquer avec une autre caméra intelligente pour la mise en oeuvre du procédé selon l'une des revendications 1 à 10.

19. Caméra intelligente selon une des revendications 17 et 18, **caractérisée en ce qu'**elle comporte des moyens de communication pour communiquer avec un dispositif de centralisation comportant des moyens de communication avec au moins une caméra et des moyens de mémorisation et/ou des moyens d'affichage pour, respectivement, le stockage et/ou l'affichage, de données relatives au suivi et/ou à ladite image acquise.

## Patentansprüche

1. Verfahren zum Verfolgen von wenigstens einem Ziel (X) durch ein Netzwerk von intelligenten Kameras (S), die jeweils Datenverarbeitungsmittel (S1) unter Ausführung von wenigstens einem Algorithmus (AS, AD, AF) zum Verfolgen von einem oder mehreren Zielen, Bilderfassungsmittel (S2) und Kommunikationsmittel (S21) umfassen, wobei das Netzwerk von Kameras (S) wenigstens eine geographische Zone, Region (Z) genannt, abdeckt, wobei das Verfolgungsverfahren eine Erkennung (50) von wenigstens einem Ziel (X) in der Region (Z) mittels wenigstens einer Kamera (S) des Netzwerks beinhaltet, mittels mindestens eines Erkennungsalgorithmus (AD), dann für jeden Zeitpunkt (t) eine Iteration von wenigstens einem Schritt (55) des Verfolgens des Ziels (X) mit wenigstens einer Kamera, aktiv genannt, mittels mindestens eines Variationsfilterungsalgorithmus (AF) auf der Basis eines Variationsfilters, unter Verwendung:

    - einer Likelihood-Funktion der Position des Ziels (X) in dem von der aktiven Kamera erfassten Bild, die die Relation zwischen einem Bild und der Position des Ziels (X) in diesem Bild definiert; und
    - eines Modells (MT), Übergangsmodell genannt, repräsentiert durch eine kontinuierliche Gaußsche Mischung, die auf einer zeitlichen Korrelation einer Bahn (T) des Ziels (X) von einem Zeitpunkt zum nächsten beruht, unter Durchführung einer Schätzung (551) der Position des Ziels (X) in den Bildern nach einer Wahrscheinlichkeitsdichte,

    **dadurch gekennzeichnet, dass** der Verfolgungsschritt (55) zu einem gegebenen Zeitpunkt (t) auch einen Schritt (553) des Bestimmens eines Indikators (J) der Relevanz der Schätzung (551) der Position des Ziels (X) mittels mindestens eines Auswahlalgorithmus (AS) beinhaltet, der das Auswählen von mindestens einer aktiven Kamera (S) zum Realisieren der Verfolgung in Abhängigkeit von ihrem Relevanzindikator (J) zulässt, der die Differenz zwischen der Wahrscheinlichkeitsdichte der Position des Ziels, vorhergesagt zum vorherigen Zeitpunkt, und der Wahrscheinlichkeitsdichte der Position des Ziels repräsentiert, geschätzt zum aktuellen Zeitpunkt.

2. Verfahren nach Anspruch 1, **dadurch gekennzeichnet, dass** der Verfolgungsschritt (55) zu einem gegebenen Zeitpunkt (t) auch einen Schritt (552) des Bestimmens von Daten (SS) beinhaltet, die eine in zeitlicher Hinsicht ausreichende Statistik repräsentieren, die die Kenntnis der Bahn (T) zum Fortsetzen der Verfolgung des Ziels (X) zum folgenden Zeitpunkt (t+1) repräsentiert.

3. Verfahren nach Anspruch 1 oder 2, **dadurch gekennzeichnet, dass** der Schritt (50) des Erkennens von mindestens einem in der Zone (Z) vorhandenen Ziel (X) zu einem Anfangszeitpunkt die Verfolgung (55) des Ziels durch alle Kameras, die das Ziel (X) erkannt haben, dann einen Wettbewerbsschritt (52) zwischen den Kameras je nach dem bestimmten Relevanzindikator (J) zum Auswählen der relevantesten und zum Bilden eines Satzes (I) von Kameras, aktive Kameras genannt, auslöst, die mit dem Verfolgen (55) zum gegebenen Zeitpunkt (t) beauftragt sind.

4. Verfahren nach einem der vorherigen Ansprüche, **dadurch gekennzeichnet, dass** der Schritt (553) des Bestimmens eines Relevanzindikators (J) der realisierten Verarbeitung einen Vergleichsschritt (54) durch jede aktive Kamera zu einem gegebenen Zeitpunkt (t) auslöst, wobei es der Relevanzindikator (J) mit einer bestimmten Schwelle in dem Auswahlalgorithmus (AS) zulässt, dass die Kamera je nach dem Ergebnis dieses Vergleichs die Verfolgung (55) fortsetzt oder abbricht.

5. Verfahren nach Anspruch 4, **dadurch gekennzeichnet, dass** der Vergleichsschritt (54), durch jede aktive Kamera zu einem gegebenen Zeitpunkt (t), von deren Relevanzindikator (J) mit einer Schwelle von einem Vergleichsschritt (541) der Entwicklung der Relevanzindikatoren (J) von anderen Kameras begleitet wird, um diese Entwicklung bei der Entscheidung zwischen dem Fortsetzen der Verfolgung (55) oder dem Abbrechen zu berücksichtigen, und danach zu beschließen, ihre Daten (SS), die die von dieser Kamera bestimmte ausreichende Statistik repräsentieren, zu den anderen Kameras (S) des Netzwerks zu übertragen (56), wobei diese Übertragung (56) das Wiederholen des Wettbewerbsschritts (52) zwischen den Kameras auslöst, um einen neuen Satz zu bilden, wenn der Relevanzindikator (J) aller Kameras die Schwelle übersteigt.

6. Verfahren nach einem der Ansprüche 1 bis 5, **dadurch gekennzeichnet, dass** der Verfolgungsschritt (55) zu jedem Zeitpunkt (t) eine Iteration eines Vorhersageschritts (552) der ein oder mehreren Positionen der ein oder mehreren Ziele zum folgenden Zeitpunkt beinhaltet.

7. Verfahren nach einem der Ansprüche 1 bis 6, **dadurch gekennzeichnet, dass** die Daten (SS), die in zeitlicher Hinsicht ausreichende Statistiken repräsentieren, ein Mittel und eine Kovarianz des zufälligen Mittelwerts der geschätzten Position des Ziels (X) repräsentieren.

8. Verfahren nach einem der Ansprüche 1 bis 7, **dadurch gekennzeichnet, dass** die Kameras an geographischen Orten sind, bekannt aufgrund der Tatsache, dass ihre Verarbeitungsmittel (S1) Daten benutzen, die relative Positionen ihrer jeweiligen Sichtfelder repräsentieren.

9. Verfahren nach Anspruch 8, **dadurch gekennzeichnet, dass** der Verfolgungsschritt (55), durch Variationsfiltrierung zum Zeitpunkt (t), wenn mehrere Kameras aktiv sind, auf kollaborative Weise durch die aktiven Kameras anhand einer Abhängigkeit zwischen ihren jeweiligen Variationsfiltern implementiert wird, ausgedrückt durch ein dynamisches Homografiemodell, das die zufälligen Mittel der Position des Ziels (X), jeweils durch jede der aktiven Kameras geschätzt, verbindet.

10. Verfahren nach Anspruch 9, **dadurch gekennzeichnet, dass** die Verfolgung auf kollaborative Weise durch die aktiven Kameras unter Austausch von Daten (SS) erfolgt, die in räumlicher Hinsicht ausreichende Statistiken, über die in zeitlicher Hinsicht hinaus, zwischen den Kameras repräsentieren, wobei diese in räumlicher Hinsicht ausreichenden Statistiken die mathematischen Erwartungen der Positionen des Ziels (X) in dem Bild jeder aktiven Kamera zum aktuellen Zeitpunkt (t) repräsentieren.

11. System zum Verfolgen von wenigstens einem Ziel (X) durch ein Netzwerk von intelligenten Kameras (S), die jeweils Datenverarbeitungsmittel (S1), Bilderfassungsmittel (S2) und Kommunikationsmittel (S21) umfassen, wobei das Netzwerk von Kameras (S) wenigstens eine Region (Z) genannte geographische Zone abdeckt, **dadurch gekennzeichnet, dass** die Datenverarbeitungsmittel (S1) wenigstens einen Algorithmus (AS, AD, AF) zum Orten und Verfolgen von einem oder mehreren Zielen durch Ausführen des Verfahrens nach einem der vorherigen Ansprüche implementieren.

12. System nach Anspruch 11, **dadurch gekennzeichnet, dass** wenigstens ein benutzter Algorithmus (AF) auf einem Variationsfilter basiert, das das Minimieren der zwischen den Kameras ausgetauschten Daten zum Verfolgen mit einem Mittelwert und einer Kovarianz zulässt.

13. System nach einem der Ansprüche 11 und 12, **dadurch gekennzeichnet, dass** wenigstens ein Bild im Laufe der Verfolgung durch wenigstens eine der Kameras erfasst wird, ausgewählt je nach ihrer Position in Bezug auf die Koordinaten und/oder die Bahn des Ziels.

14. System nach Anspruch 13, **dadurch gekennzeichnet, dass** das genannte Bild, erfasst mit wenigstens einer für ihre Position ausgewählten Kamera, in den Speichermitteln derselben Kamera gespeichert wird.

15. System nach einem der Ansprüche 11 bis 14, **dadurch gekennzeichnet, dass** es wenigstens eine Zentralisierungsvorrichtung umfasst, die Mittel zum Kommunizieren mit den Kameras des Systems und Mittel zum Speichern und/oder Mittel zum Anzeigen umfasst, um jeweils das Speichern und/oder das Anzeigen von Daten in Bezug auf die Verfolgung und/oder auf das genannte erfasste Bild umfasst, übertragen durch die Kameras.

16. System nach Anspruch 15, **dadurch gekennzeichnet, dass** die Zentralisierungsvorrichtung Eingabemittel umfasst, die es einem Bediener gestatten, das Verfolgen des Ziels zu überprüfen, auf der Basis der von den Kameras übertragenen und auf der genannten Vorrichtung angezeigten Daten, und gegebenenfalls einen kompetenten Dienst über die Kommunikationsmittel der Vorrichtung zu alarmieren.

17. Intelligente Kamera, die mindestens eine geographische Zone abdeckt und Datenverarbeitungsmittel, Bilderfassungsmittel umfasst, **dadurch gekennzeichnet, dass** die Datenverarbeitungsmittel mindestens einen Algorithmus zum Orten von einem oder mehreren Zielen durch Ausführen des Verfahrens nach einem der Ansprüche 1 bis 7 implementieren.

18. Intelligente Kamera nach dem vorherigen Anspruch, **dadurch gekennzeichnet, dass** sie Kommunikationsmittel zum Kommunizieren mit einer anderen intelligenten Kamera zum Ausführen des Verfahrens nach einem der Ansprüche 1 bis 10 umfasst.

19. Intelligente Kamera nach einem der Ansprüche 17 und 18, **dadurch gekennzeichnet, dass** sie Kommunikationsmittel zum Kommunizieren mit einer Zentralisierungsvorrichtung umfasst, die Kommunikationsmittel mit mindestens einer Kamera und Speichermittel und/oder Anzeigemittel umfasst, um jeweils Daten in Bezug auf das Verfolgen und/oder auf das erfasste Bild zu speichern und/oder anzuzeigen.

**Claims**

1. Method for tracking at least one target (X) with a network of smart cameras (S), each comprising data processing means (S1) using at least one algorithm (AS, AD, AF) for the tracking of target(s), image acquisition means (S2) and communication means (S21), the network of cameras (S) covering at least one geographical area called a region (Z), the tracking method comprises detection of at least one target (X) in the region (Z) by at least one camera (S) of the network, owing to at least one detection algorithm (AD), then, for each moment (t), an iteration of at least one step of tracking (55) of the target (X) by at least one camera, called the active camera, owing to at least one variational filtering algorithm (AF) based on a variational filter, using:

   - a function of probability of the position of the target (X) in the image acquired by said active camera, defining the relationship between an image and the position of the target (X) in this image; and
   - a so-called transition model (MT) represented by a continuous mixture of Gaussian distributions and based on a temporal correlation of a trajectory (T) of the target (X) from one moment to the next, using an estimate (551) of the position of the target (X) in the images by a probability density,

   **characterised in that** the step of tracking (55) at a given moment (t) also comprises a step of determination (553) of an indicator (J) of relevance of the estimate (551) of the position of the target (X), owing to at least one selection algorithm (AS) allowing the selection of at least one active camera (S) for carrying out tracking, as a function of its relevance indicator (J) which represents the difference between the probability density of the position of the aforementioned target at the preceding moment and the probability density of the position of the target estimated at the current moment.

**2.** Method according to claim 1, **characterised in that** the step of tracking (55) at a given moment (t) also comprises a step of determination (552) of data (SS) representing a sufficient statistic in temporal terms, representing the knowledge of the trajectory (T), for continuing tracking of the target (X) at the following moment (t+1).

**3.** Method according to claim 1 or 2, **characterised in that** the step of detection (50) of at least one target (X) present in the region (Z), at an initial moment, triggers tracking (55) of the target by all cameras which have detected the target (X), then a step of competition (52) between the cameras, as a function of the given relevance indicator (J), in order to select the most relevant and form a set (I) of so-called active cameras in charge of tracking (55) at the given moment (t).

**4.** Method according to one of the preceding claims, **characterised in that** the step of determination (553) of an indicator (J) of relevance of the processing carried out triggers a step of comparison (54), by each camera active at a given moment (t), of the relevance indicator (J) with a given threshold in the selection algorithm (AS) allowing the camera, as a function of the result of this comparison, to continue tracking (55) or abandon it.

**5.** Method according to claim 4, **characterised in that** the step of comparison (54), by each camera active at a given moment (t), of its relevance indicator (J) with a threshold is accompanied by a step of comparison (541) of the trend of relevance indicators (J) of the other cameras, in order to take account of this trend in the decision between continuing tracking (55) and abandoning it, and decide whether there is occasion to transmit (56), to the other cameras (S) of the network, data (SS) representing the sufficient statistic determined by this camera, this transmission (56) triggering reiteration of the step of competition (52) between the cameras in order to form a new set when the relevance indicator (J) of all cameras crosses the threshold.

**6.** Method according to one of claims 1 to 5, **characterised in that** the tracking step (55) comprises, at each moment (t), an iteration of a step of prediction (552) of the position(s) of the target(s) at the following moment.

**7.** Method according to one of claims 1 to 6, **characterised in that** the data (SS) representing sufficient statistics in temporal terms represent an average and a covariance of the random average of the estimated position of the target (X).

**8.** Method according to one of claims 1 to 7, **characterised in that** the cameras have known geographical locations owing to the fact that their processing means (SI) use data representing the relative positioning of their respective fields of vision.

**9.** Method according to claim 8, **characterised in that** the step of tracking (55), by variational filtering, at moment (t), when a plurality of cameras are activated, is implemented in a collaborative manner by the active cameras, owing to dependence between their respective variational filters expressed by a dynamic model of homography connecting the random averages of the position of the target (X) respectively estimated by each of the active cameras.

**10.** Method according to claim 9, **characterised in that** tracking is carried out in a collaborative manner by the active cameras by exchanging the data (SS) representing sufficient statistics in spatial terms between the cameras, in addition to those in temporal terms, these sufficient statistics in spatial terms representing the mathematical expectations of the positions of the target (X) in the image of each camera active at the current moment (t).

**11.** System of tracking of at least one target (X) by a network of smart cameras (S), each comprising data processing means (SI), image acquisition means (S2) and communication means (S21), the network of cameras (S) covering at least one geographical area called a region (Z), **characterised in that** the data processing means (SI) implement at least one algorithm (AS, AD, AF) for the location and tracking of target(s) by employing the method according to one of the preceding claims.

**12.** System according to claim 11, **characterised in that** at least one algorithm (AF) used is based on a variational filter making it possible to minimise the data exchanged between the cameras for tracking to an average and a covariance.

**13.** System according to one of claims 11 and 12, **characterised in that** at least one image is acquired during tracking by at least one of the cameras, selected as a function of its position relative to the coordinates and/or the trajectory of the target.

**14.** System according to claim 13, **characterised in that** said image, acquired by at least one camera selected for its position, is stored in storage means of this same camera.

15. System according to one of claims 11 to 14, **characterised in that** it comprises at least one centralisation device comprising means for communication with the cameras of the system and storage means and/or display means for the storage and/or display respectively of data relating to tracking and/or to said image acquired, transmitted by the cameras.

16. System according to claim 15, **characterised in that** the centralisation device comprises capture means allowing an operator to verify tracking of the target, on the basis of the data transmitted by the cameras and displayed on said device, and, if occasion arises, to alert a competent service via the communication means of said device.

17. Smart camera, covering at least one geographical area, and comprising data processing means and image acquisition means, **characterised in that** the data processing means implement at least one algorithm for the location of target(s) by employing the method according to one of claims 1 to 7.

18. Smart camera according to the preceding claim, **characterised in that** it comprises communication means for communicating with another smart camera for employing the method according to one of claims 1 to 10.

19. Smart camera according to one of claims 17 and 18, **characterised in that** it comprises communication means for communicating with a centralisation device comprising means for communication with at least one camera and storage means and/or display means for the storage and/or display respectively of data relating to tracking and/or to said image acquired.

# FIGURE 1

## FIGURE 2

Détection des cibles à t=0

50

Déclenchement du tracking parallèle par les caméras du réseau

56

Diffusion des Statistiques Suffisantes

Compétition des Caméras selon un critère de pertinence informationnelle

52

Sélection d'un ensemble de caméras actives

NON

OUI

541

Exécution de l'algorithme variationnel collaboratif distribué

55

Critère J est-il supérieur à un seuil fixé J0

Valeur du critère J

Valeur des statistiques suffisantes

Estimation de la position de la cible

54

553

552

551

FIGURE 3

**EP 2 419 882 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description

- **OMAR JAVED et al.** Automated Multi-Camera Surveillance: Algorithms and Practice. Springer, 2008